(19) Europäisches Patentamt
European Patent Office
Office européen des brevets

(11) EP 1 024 177 B1

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.[7]: **C09B 67/20**, C09B 67/22, C09B 5/62, C08K 5/3432, C09D 11/00

(21) Anmeldenummer: **00100711.1**

(22) Anmeldetag: **14.01.2000**

(54) **Pigmentzubereitungen mit mehreren Perylenverbindungen**

Pigment preparations with several perylene compounds

Préparations pigmentaires de plusieurs composés de perylène

(84) Benannte Vertragsstaaten:
**CH DE ES FR GB IT LI**

(30) Priorität: **26.01.1999 DE 19902907**

(43) Veröffentlichungstag der Anmeldung:
**02.08.2000 Patentblatt 2000/31**

(73) Patentinhaber: **Clariant GmbH**
**65929 Frankfurt am Main (DE)**

(72) Erfinder:
- **Weber, Joachim, Dr.**
  **65929 Frankfurt (DE)**
- **Urban, Manfred**
  **65205 Wiesbaden (DE)**
- **Opravil, Manfred**
  **61184 Karben (DE)**
- **Dietz, Erwin, Dr.**
  **61462 Königstein (DE)**

(56) Entgegenhaltungen:
**EP-A- 0 504 872**
**EP-A- 0 864 613**
**EP-A- 0 937 724**
**WO-A-91/02034**
**FR-A- 2 672 054**
**US-A- 4 762 569**
**US-A- 5 466 807**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 024 177 B1

## Beschreibung

Die vorliegende Erfindung betrifft neue Pigmentzubereitungen mit verbesserten coloristischen und rheologischen Eigenschaften sowie deren Herstellung und Verwendung zum Pigmentieren von hochmolekularen Materialien.

Pigmentzubereitungen sind Kombinationen von Pigmenten und strukturell zu Pigmenten analogen Pigmentdispergatoren, die mit spezifisch wirksamen Gruppen substituiert sind. Sie werden den Pigmenten zugesetzt, um die Dispergierung in den Anwendungsmedien, insbesondere in Lacken, zu erleichtern und um die rheologischen und coloristischen Eigenschaften der Pigmente zu verbessern. Die Viskosität der hochpigmentierten Lackkonzentrate (Millbase) wird erniedrigt und die Flockung der Pigmentteilchen vermindert. Dadurch kann beispielsweise die Transparenz und der Glanz erhöht werden. Dies ist insbesondere bei Metallicpigmenten erwünscht.

Es gibt eine Vielzahl von Vorschlägen zur Verbesserung der rheologischen und coloristischen Eigenschaften von organischen Pigmenten durch Zusatz von Pigmentdispergatoren, die jedoch nicht immer zum erhofften Resultat führen. Die EP-A-0 321 919 beschreibt die Herstellung von Pigmentzubereitungen durch Mischen der Basispigmente mit methylenimidazolylgruppenhaltigen Pigmentderivaten. Auf dem Gebiet der Perylenpigmente werden Pigmentzubereitungen erhalten, deren coloristische Eigenschaften nicht mehr den heutigen Anforderungen genügen.

Die DE-A-3 106 906 beschreibt die Herstellung von sulfonamidgruppenhaltigen Pigmentdispergatoren. Die dort beschriebenen Pigmentdispergatoren auf der Basis von Perylenverbindungen besitzen jedoch erhebliche coloristische und rheologische Mängel.

Die EP-A- 0 504 872 beschreibt innere Salze von Perylentetracarbonsäurediimiden, die im selben Molekül an dem einen Imidstickstoff einen anionisch wirksamen Rest, am anderen Imidstickstoff einen kationisch wirksamen Rest aufweisen und als Pigmentdispergatoren eingesetzt werden. Pigmentzubereitungen mit diesen Dispergatoren erfüllen jedoch nicht mehr die heutigen Anforderungen an Transparenz und Farbstärke.

Die DE-A-197 09 798 offenbart Pigmentzubereitungen mit asymmetrischen, die US-A-4 762 569 beschreibt die Herstellung von Pigmentzubereitungen auf der Basis von symmetrischen Perylen-3,4,9,10-tetracarbonsäurediimiden. Diese Pigmentzubereitungen sind oft nur für den Einsatz in lösemittelhaltigen Systemen geeignet. Sie erfüllen auch nicht alle Anforderungen hinsichtlich der rheologischen und coloristischen Eigenschaften, die an Pigmentzubereitungen gestellt werden. Die coloristischen Eigenschaften sind insbesondere bei hohen Pigmentdispergatorgehalten nicht mehr ausreichend, und in manchen Fällen ist ein deutlicher Glanzverlust und eine Farbtonabweichung feststellbar. Außerdem besitzen diese Pigmentdispergatoren eine ungenügende Lösemittel- und Überlackierechtheit, wodurch ihr universeller Einsatz sehr eingeschränkt ist Desweiteren können Unverträglichkeiten mit dem Bindemittel in manchen Lacksystemen beobachtet werden.

Die EP-A-0 485 441 beschreibt die Herstellung von Pigmentzubereitungen auf Basis saurer Perylen-3,4,9,10-tetracarbonsäurediimiden. Sie erfüllen jedoch nicht alle Anforderungen hinsichtlich der rheologischen und coloristischen Eigenschaften, die an Pigmentzubereitungen gestellt werden. Bei Einsatz von sauren Perylenverbindungen in wässrigen Lacksystemen, die oft einen alkalischen pH besitzen, kann es zu Problemen kommen, wodurch ihr universeller Einsatz eingeschränkt ist.

Es bestand ein Verbesserungsbedarf und daher die Aufgabe, Pigmentzubereitungen zur Verfügung zu stellen, die die genannten Nachteile des Standes der Technik im Hinblick auf Coloristik, Rheologie und universelle Anwendbarkeit überwinden. Es wurde gefunden, daß die Aufgabe überraschenderweise durch Pigmentzubereitungen gelöst wird, die neben den Basispigmenten eine Kombination mindestens zwei bestimmter Perylen-3,4,9,10-tetracarbonsäurediimide enthalten.

Gegenstand der Erfindung sind Pigmentzubereitungen, gekennzeichnet durch einen Gehalt an

a) mindestens einem organischen Basispigment,
b1) mindestens einem Pigmentdispergator der allgemeinen Formel (I),

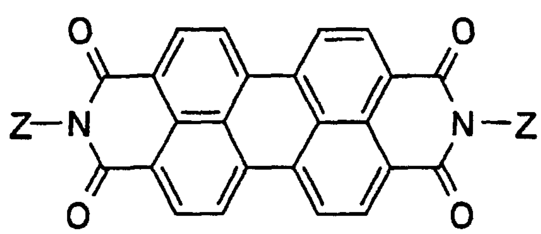

(I)

worin die beiden Reste Z gleich oder verschieden sind und Z die Bedeutung $Z^1$, $Z^2$, $Z^3$ oder $Z^4$ hat, mit der Maßgabe, daß beide Reste Z nicht gleichzeitig $Z^4$ bedeuten, und worin

$Z^1$ ein Rest der Formel (Ia) ist,

$$- [X\text{-}Y]_q\text{-}[X^1\text{-}Y^1]_r\text{-}[X^2\text{-}NH]_s H \quad \text{(Ia)}$$

worin

$X$, $X^1$ und $X^2$ gleich oder verschieden sind und einen verzweigten oder unverzweigten $C_2$-$C_6$-Alkylenrest oder einen $C_5$-$C_7$-Cycloalkylenrest bedeuten, der durch 1 bis 4 $C_1$-$C_4$-Alkylreste, Hydroxyreste, Hydroxyalkylreste mit 1 bis 4 Kohlenstoffatomen und/oder durch 1 bis 2 weitere $C_5$-$C_7$-Cycloalkylreste substituiert sein kann;

Y und $Y^1$ gleich oder verschieden sind und eine NH-, -O-, $N(C_1$-$C_6$-alkyl)-Gruppe, vorzugsweise $-NCH_3$, oder

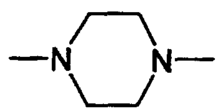

bedeuten;

q eine Zahl von 1 bis 6, vorzugsweise 1, 2, 3 oder 4;

r und s unabhängig voneinander eine Zahl von 0 bis 6, vorzugsweise 0, 1 oder 2, wobei r und s nicht gleichzeitig Null sind;

und worin

$Z^2$ ein Rest der Formel (Ib) ist,

$$- [X\text{-}O]_{q1}\text{-}[X^1\text{-}O]_q H \quad \text{(Ib)}$$

worin

$q_1$ eine Zahl von 0 bis 6, vorzugsweise 0, 1, 2, 3 oder 4;

und worin

$Z^3$ ein Rest der Formel (Ic) ist,

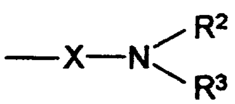

(Ic)

worin

$R^2$ und $R^3$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teiloder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein und vorzugsweise 1 bis 4 an der Zahl sein können, oder

$R^2$ und $R^3$ zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und

X die oben genannte Bedeutung hat;

$Z^4$ Wasserstoff, Hydroxy, Amino, Phenyl oder $C_1$-$C_{20}$-Alkyl ist, wobei der Phenylring und die Alkylgruppe durch ein oder mehrere, z.B. 1, 2, 3 oder 4, Substituenten aus der Gruppe Cl, Br, CN, OH, $C_6H_5$, Carbamoyl, $C_2$-$C_4$-Acyl und $C_1$-$C_4$-Alkoxy, z.B. Methoxy oder Ethoxy, substituiert sein können, der Phenylring auch durch $NR^2R^3$ substituiert sein kann, wobei $R^2$ und $R^3$ die oben genannte Bedeutung haben, oder die Alkylgruppe perfluoriert oder teilfluoriert ist;

b2) mindestens einem Pigmentdispergator der allgemeinen Formel (II),

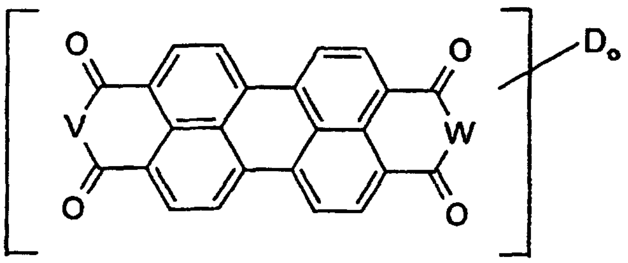

(II)

in welcher

- V einen bivalenten Rest -O-, $>NR^4$, oder $>N-R^5-Y^-X^+$ und
- W den bivalenten Rest $>N-R^5-Y^-X^+$ bedeutet,
- D ein Chlor- oder Bromatom und sofern o > 1 ggf. eine Kombination davon darstellt, und
- o eine Zahl von 0 bis 4 ist;
- $R^4$ für ein Wasserstoffatom oder eine $C_1$-$C_{20}$-Alkylgruppe, insbesondere $C_1$-$C_4$-Alkyl, oder für eine Phenylgruppe steht, die unsubstituiert oder durch Halogen wie Chlor oder Brom, $C_1$-$C_4$-Alkyl wie Methyl oder Ethyl, $C_1$-$C_4$-Alkoxy wie Methoxy oder Ethoxy, oder Phenylazo ein- oder mehrfach, z.B. 1-, 2- oder 3-fach, substituiert sein kann,
- $R^5$ für eine $C_1$-$C_{18}$-Alkylengruppe steht, die innerhalb der C-C-Kette durch ein Brückenglied aus der Reihe -O-, $-NR^6$, -S-, Phenylen, -CO-, $-SO_2$-, oder $-CR^7R^8$ oder eine chemisch sinnvolle Kombination davon ein- oder mehrfach unterbrochen sein kann, worin $R^6$, $R^7$ und $R^8$ unabhängig voneinander jeweils ein Wasserstoffatom oder eine $C_1$-$C_4$-Alkylgruppe sind, die unsubstituiert oder durch einen heterocyclischen Rest, vorzugsweise Imidazol oder Piperazin, substituiert sein kann,
  insbesondere aber eine geradkettige oder verzweigte $C_1$-$C_6$-Alkylengruppe wie Ethylen oder Propylen ist; oder für eine Phenylengruppe steht, die unsubstituiert oder durch $C_1$-$C_4$-Alkyl wie Methyl oder Ethyl, oder $C_1$-$C_4$-Alkoxy wie Methoxy oder Ethoxy ein- oder mehrfach, z.B. 1-, 2- oder 3-fach, substituiert sein kann,
- $Y^-$ einen der anionischen Reste $-SO_3^-$ oder $COO^-$ bedeutet, und
- $X^+$ $H^+$ oder das Äquivalent $\frac{M^{m+}}{m}$

eines Metallkations $M^{m+}$ aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist, und $M^{m+}$ z.B. $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Co^{2+}$, $Zn^{2+}$, $Fe^{2+}$, $Al^{3+}$, $Cr^{3+}$ oder $Fe^{3+}$;
oder ein Ammoniumion $N^+R^9R^{10}R^{11}R^{12}$ definiert, wobei die Substituenten $R^9$, $R^{10}$, $R^{11}$ und $R^{12}$ unabhängig voneinander jeweils ein Wasserstoffatom, $C_1$-$C_{30}$-Alkyl, $C_1$-$C_{30}$-Alkenyl, $C_5$-$C_{30}$-Cycloalkyl, unsubstituiertes oder durch $C_1$-$C_8$-alkyliertes Phenyl, ($C_1$-$C_4$)-Alkylen-phenyl, vorzugsweise Benzyl, oder eine (Poly)alkylenoxygruppe der Formel $-[CH(R^{80})-CH_2-O]_k-H$ sind, in der k eine Zahl von 1 bis 30 ist und $R^{80}$ für Wasserstoff, $C_1$-$C_4$-Alkyl oder, sofern k > 1 ist, eine Kombination davon steht;
und worin als $R^9$, $R^{10}$, $R^{11}$, und/oder $R^{12}$ ausgewiesenes Alkyl, Alkenyl, Cycloalkyl, Phenyl oder Alkylphenyl außerdem durch Amino, Hydroxy, und/oder Carboxy substituiert sein können;
oder wobei die Substituenten $R^9$ und $R^{10}$ zusammen mit dem quartären N-Atom ein fünf- bis siebengliedriges gesättigtes Ringsystem, das ggf. noch weitere Heteroatome aus der Gruppe O, S und N enthält, bilden können, z.B. ein Pyrrolidon, Imidazolidin, Hexamethylenimin, Piperidin, Piperazin oder Morpholin; oder wobei die Substituenten $R^9$, $R^{10}$, und $R^{11}$ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können, z.B. ein Pyrrol, Imidazol, Pyridin, Picolin, Pyrazin, Chinolin oder Isochinolin;
ausgenommen eine Pigmentzubereitung enthaltend
ein organisches Basispigment, einen Pigmentdispergator der Formel (IX)

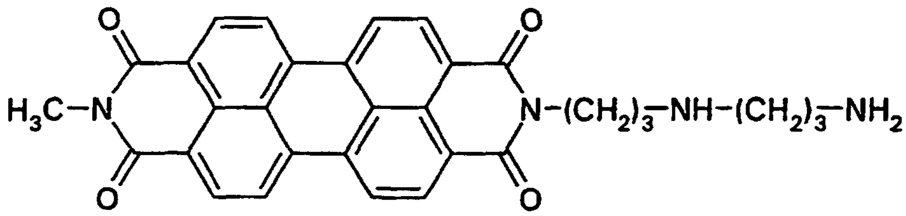

(IX)

und einen Pigmentdispergator der Formel (X)

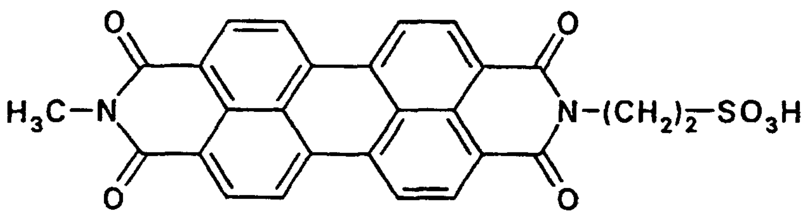

(X) .

Je nach Auswahl der Reste Z werden symmetrische oder asymmetrische Pigmentdispergatoren der Formel (I) erhalten, wobei asymmetrische Pigmentdispergatoren der Formel (I) auch solche sind, die unterschiedliche Reste $Z^1$, $Z^2$ bzw. $Z^3$ haben.

Von Interesse sind beispielsweise Pigmentdispergatoren der Formel (I), worin X, $X^1$ und $X^2$ ein $C_2$-$C_4$-Alkylenrest oder Cyclohexylen bedeuten.

Von besonderem Interesse sind beispielsweise Pigmentdispergatoren der Formel (I), worin $Z^1$ eine der folgenden Bedeutungen hat: $-[(CH_2)_3-NH]_2-H$, $-(CH_2-CH_2-NH)_2H$, $-(CH_2)_3-NH-(CH_2)_2-NH-(CH_2)_3-NH_2$,

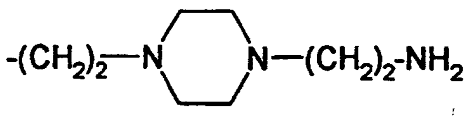

,

$-(CH_2)_3-N(CH_3)-(CH_2)_3-NH_2$, $-(CH_2)_3-O-(CH_2)_2-O-(CH_2)_3-NH_2$, $-(CH_2)_3-O-(CH_2)_3-O-(CH_2)_3-NH_2$, $-(CH_2)_2-NH-(CH_2)_3-NH_2$, $-(CH_2)_3-NH-(CH_2)_2-NH_2$, $-(CH_2-CH_2-NH)_3-H$, $-(CH_2-CH_2-NH)_4-H$, $-(CH_2-CH_2-NH)_5-H$, $-(CH_2)_3-O-(CH_2)_2-O-(CH_2)_2-O-(CH_2)_3-NH_2$, $-(CH_2)_3-O-(CH_2)_4-O-(CH_2)_3-NH_2$,

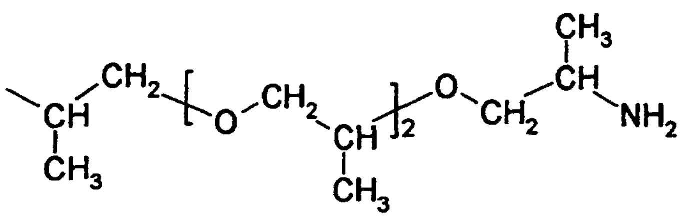

,

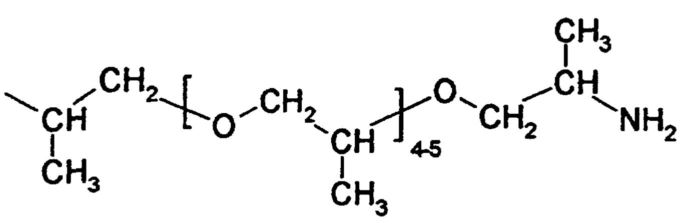

.

Von Interesse sind beispielsweise Pigmentdispergatoren der Formel (I), worin $Z^2$ eine der Bedeutungen $-(CH_2)_2-OH$, $-(CH_2)_3-OH$, $-CH_2-CH(CH_3)-OH$, $-CH(CH_2-CH_3)CH_2-OH$, $-CH(CH_2OH)_2$, $-(CH_2)_2-O-(CH_2)_2-OH$ oder $-(CH_2)_3-O-(CH_2)_2-O-(CH_2)_2-OH$ hat.

Von Interesse sind beispielsweise Pigmentdispergatoren der Formel (I), worin

$R^2$ und $R^3$ unabhängig voneinander ein Wasserstoffatom, eine $C_1$-$C_6$-Alkylgruppe, eine durch 1 bis 2 Substituenten aus der Gruppe Hydroxy, Acetyl, Methoxy, Ethoxy, Chlor und Brom substituierte $C_1$-$C_6$-Alkylgruppe darstellen, oder $R^2$ und $R^3$ zusammen mit dem angrenzenden N-Atom einen Imidazolyl-, Piperidinyl-, Morpholinyl-, Pipecolinyl-, Pyrrolyl-, Pyrrolidinyl-, Pyrazolyl- oder Piperazinyl-Ring bilden.

Von besonderem Interesse sind beispielsweise Pigmentdispergatoren der Formel (I), worin $Z^3$ eine der Bedeutungen $-(CH_2)_2-NH_2$, $-(CH_2)_3-NH_2$, $-CH_2-CH(CH_3)-NH_2$, $-CH_2-C(CH_3)_2-CH_2-NH_2$,

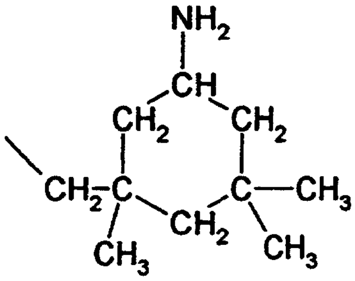 , 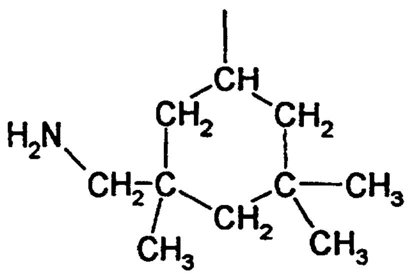 ,

$-(CH_2)_2-NH-CH_3$, $-(CH_2)_2-N(CH_3)_2$, $-(CH_2)_2-NH-CH_2-CH_3$, $-(CH_2)_2-N(CH_2-CH_3)_2$, $-(CH_2)_3-NH-CH_3$, $-(CH_2)_3-N(CH_3)_2$, $-(CH_2)_3-NH-CH_2-CH_3$ oder $-(CH_2)_3-N(CH_2-CH_3)_2$ hat.

Von Interesse sind beispielsweise Pigmentdispergatoren der Formel (I), worin $Z^4$ Wasserstoff, Amino, Phenyl, Benzyl, mit $NR^2R^3$ substituiertes Phenyl oder Benzyl, $C_1$-$C_6$-Alkyl oder ein durch 1 bis 2 Substituenten aus der Gruppe Hydroxy, Acetyl, Methoxy und Ethoxy substituiertes $C_2$-$C_6$-Alkyl, besonders bevorzugt Wasserstoff,

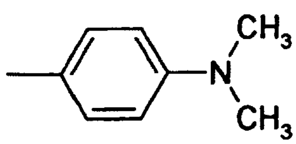 , 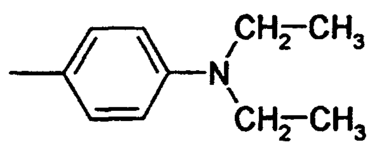 ,

Methyl, Ethyl, Propyl, Butyl, Benzyl, Hydroxyethyl, Hydroxypropyl oder Methoxypropyl ist.

Die erfindungsgemäß als Pigmentdispergator b) eingesetzten Perylenverbindungen der allgemeinen Formeln (I) und (II) lassen sich beispielsweise gemäß der DE-A-3 017 185 oder der EP-A-0 486 531 durch Umsetzung von Perylen-3,4,9,10-tetracarbonsäuremonoanhydridmonoimiden der allgemeinen Formeln (IV)

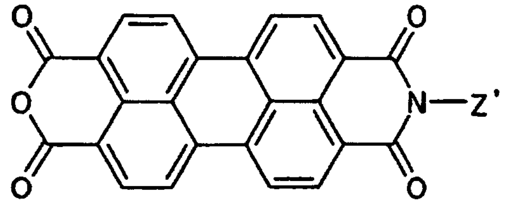 (IV)

mit einem oder mehreren, vorzugsweise 1 oder 2 Aminen der Formel (V)

$$H_2N — Z' \qquad (V)$$

worin Z' in Formel (IV) und Z' in Formel (V) gleich oder verschieden sein können, und die Bedeutung von Z oder von $R^4$ oder $R^5$-$Y^-X^+$ haben,
oder durch Umsetzung von Perylen-3,4,9,10-tetracarbonsäure-dianhydrid der Formel (VI)

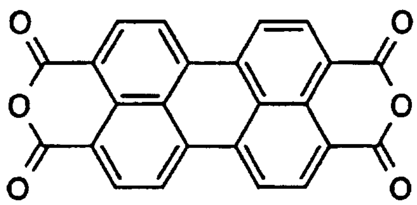

**(VI)**

mit einem oder mehreren, vorzugsweise 1 oder 2, Aminen der Formel (V) herstellen.

Die Umsetzung kann in wäßrigem, organischen oder wäßrig-organischem Medium beispielsweise bei Temperaturen bis 250 °C, vorzugsweise bis 180 °C, durchgeführt werden. Als organisches Medium kommen inerte organische Lösemittel, bevorzugt solche, deren Siedepunkt über dem von Wasser liegt, in Betracht, beispielsweise DMSO, Chlorbenzol, Dichlorbenzole, Trichlorbenzole, höhersiedende Alkohole, Carbonamide, Chinolin, Imidazol, Naphthalin, Phenol und höhersiedende Ether. Auch die Amine der Formel (V) können gleichzeitig als Lösemittel dienen. Der pH-Wert des wäßrigen oder wäßrig-organischen Mediums kann sauer, neutral oder alkalisch sein, vorzugsweise zwischen pH 3 und 14. Es können auch verschiedene Amine gleichzeitig eingesetzt werden, um Mischungen von Pigmentdispergatoren der Formel (I) oder der Formel (II) herzustellen.

Die Kondensation wird besonders bevorzugt in wäßriger Lösung unter alkalischen pH-Bedingungen bei Temperaturen im Bereich zwischen 50 und 180 °C durchgeführt. Zweckmäßig werden hierbei die Amine im Überschuß eingesetzt, zweckmäßig in einem bis zu 8-fachen, vorzugsweise bis zu einem 4-fachen molaren Überschuß. Die Isolierung der gebildeten Verfahrensprodukte der Formel (I) aus dem Reaktionsgemisch erfolgt vorzugsweise durch Filtration.

Als Amine der allgemeinen Formel (V) können beispielsweise Taurin (2-Aminoethansulfonsäure), β-Alanin, 4-Aminobuttersäure, Ammoniak, Methylamin, Ethylamin, n-Propylamin, n-Butylamin, n-Hexylamin, β-Hydroxyethylamin, β- oder γ-Hydroxypropylamin, Hydroxylamin, Hydrazin, N,N-Dimethyl-p-phenylendiamin, Dimethylaminomethylamin, Diethylaminoethylamin, 2-Ethylhexylaminoethylamin, Stearylaminoethylamin, Oleylaminoethylamin, Dimethylaminoproyplamin, Diethylaminopropylamin, Dibutylaminopropylamin, Diethylaminobutylamin, Dimethylaminoamylamin, Diethylaminohexylamin, Piperidinomethylamin, Piperidinoethylamin, Piperidinopropylamin, Pipecolinoethylamin, Pipecolinopropylamin, Imidazolopropylamin, Morpholinoethylamin, Morpholinopropylamin, Piperazinoethylamin, 2-(2-Aminoethoxy)ethanol, 2-(2-(3-Aminopropoxy)ethoxy)ethanol, 3,3'-Oxybis(ethylenoxy)bis(propylamin), Ethylendiamin, 1,2-Propandiamin, 1,3-Propandiamin, 2,2-Dimethyl-1,3-propandiamin, Isophorondiamin, Diethylentriamin, Triethylentetramin, Tetraethylenpentamin, Pentaethylenhexamin, Dipropylentriamin, N,N-Bis-(3-aminopropyl)methylamin, Tripropylentetramin, (3-(2-Aminoethyl)aminopropylamin, (N,N'-Bis(3-aminopropyl)ethylendiamin), 4,7-Dioxadecan-1,10-diamin, 4,9-Dioxadodecan-1,12-diamin, 5-Amino-1,3,3-trimethylcyclohexanmethanamin oder 1,4-Bis-(3-aminopropoxy)-butan eingesetzt werden.

Unter Basispigment werden organische Pigmente oder Mischungen organischer Pigmente verstanden, die auch als übliche Pigmentzubereitungen vorliegen können. Geeignete Basispigmente für die Herstellung der erfindungsgemäßen Pigmentzubereitungen sind beispielsweise Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Thioindigo-, Isoindolin, Isoindolinon-, Pyranthron-, Isoviolanthron-, Carbon Black-Pigmente (Ruß) oder Mischungen davon. Es kann auch mehr als ein Basispigment eingesetzt werden.

Bevorzugte Basispigmente im Sinne der vorliegenden Erfindung sind beispielsweise C.I. Pigment Red 123 (C.I. No. 71145), C.I. Pigment Red 149 (C.I. No. 71137), C.I. Pigment Red 178 (C.I. No. 71 155), C.I. Pigment Red 179 (C.I. No. 71 130), C.I. Pigment Red 190 (C.I. 71 140), C.I. Pigment Red 224 (C.I. No. 71 127), C.I. Pigment Violet 29 (C.I. No. 71 129), C.I. Pigment Orange 43 (C.I. No. 71 105), C.I. Pigment Red 194 (C.I. No. 71 100), C.I. Pigment Violet 19 (C.I. No. 73 900), C.I. Pigment Red 122 (C.I. No. 73 915), C.I. Pigment Red 192, C.I. Pigment Red 202 (C.

I. No. 73 907), C.I. Pigment Red 207, C.I. Pigment Red 209 (C.I. No. 73 905), C.I. Pigment Red 206 (C.I. No. 73 900/73 920), C.I. Pigment Orange 48 (C.I. No. 73 900/73 920), C.I. Pigment Orange 49 (C.I. No. 73 900/73 920), C.I. Pigment Orange 42, C.I. Pigment Yellow 147, C.I. Pigment Red 168 (C.I. No. 59 300), C.I. Pigment Yellow 120 (C.I. No. 11 783), C.I. Pigment Yellow 151 (C.I. No. 13 980), C.I. Pigment Brown 25 (C.I. No. 12 510), C.I. Pigment Violet 32 (C.I. No. 12 517), C.I. Pigment Orange 64; C.I. Pigment Brown 23 (C.I. No. 20 060), C.I. Pigment Red 166 (C.I. No. 20 730), C.I. Pigment Red 170 (C.I. No. 12 475), C.I. Pigment Orange 38 (C.I. No. 12 367), C.I. Pigment Red 188 (C.I. No. 12 467), C.I. Pigment Red 187 (C.I. No. 12 486), C.I. Pigment Orange 34 (C.I. No. 21 115), C.I. Pigment Orange 13 (C. I. No. 21 110), C.I. Pigment Red 9 (C.I. No. 12 460), C.I. Pigment Red 2 (C.I. No. 12 310), C.I. Pigment Red 112 (C.I. No. 12 340), C.I. Pigment Red 7 (C.I. No. 12 420), C.I. Pigment Red 210 (C.I. No. 12 477), C. I. Pigment Red 12 (C. I. No. 12 385), C.I. Pigment Blue 60 (C.I. No. 69 800), C.I. Pigment Green 7 (C.I. No. 74 260),C.I. Pigment Green 36 (C.I. No. 74 265); C.I. Pigment Blue 15:1, 15:2, 15:3, 15:4, 15:6 und 15 (C.I. No. 74160); C.I. Pigment Blue 56 (C.I. No. 42 800), C.I. Pigment Blue 61 (C.I. No. 42 765:1), C.I. Pigment Violet 23 (C.I. No. 51 319), C.I. Pigment Violet 37 (C.I. No. 51 345), C.I. Pigment Red 177 (C.I. No. 65 300), C.I. Pigment Red 254 (C.I. No. 56 110), C.I. Pigment Red 255 (C.I. No. 56 1050), C.I. Pigment Red 264, C.I. Pigment Red 270,-C.I. Pigment Red 272 (C.I. No. 56 1150), C.I. Pigment Red 71, C.I. Pigment Orange 73, C.I. Pigment Red 88 (C.I. No. 73 312).

Die Menge der Pigmentdispergatoren b1) der Formel (I) und der Pigmentdispergatoren b2) der Formel (II) in den erfindungsgemäßen Pigmentzubereitungen kann, soweit die angestrebte Pigmentqualität nicht negativ beeinflußt wird, in weiten Grenzen schwanken, doch kommt im allgemeinen ein Gehalt einer Mischung aus den Pigmentdispergatoren b1) und b2) von 1 bis 40 Gew.-%, vorzugsweise 2 bis 30 Gew.-%, bezogen auf das Gewicht des Basispigments, in Betracht.

Die Mengenverhältnisse zwischen dem Pigmentdispergator gemäß b1) und b2) können beispielsweise zwischen 1:10 und 10:1 Gewichtsteilen liegen, bevorzugt zwischen 1:5 und 5:1 Gewichtsteilen, insbesondere zwischen 1:3 und 3:1 Gewichtsteilen.

Die erfindungsgemäßen Pigmentzubereitungen können neben dem Basispigment, dem Pigmentdispergator b1) und dem Pigmentdispergator b2) noch weitere übliche Zusatzstoffe enthalten, wie beispielsweise Füllstoffe, Stellmittel, oberflächenaktive Mittel, Harze, Entschäumer, Antistaubmittel, Extender, Farbmittel zum Nuancieren, Konservierungsmittel oder Trocknungsverzögerungsmittel.

Bevorzugte Pigmentzubereitungen im Sinne der vorliegenden Erfindung bestehen im wesentlichen aus

a) 40 bis 99 Gew.-%, vorzugsweise 60 bis 98 Gew.-%, mindestens eines Basispigments a),
b) 1 bis 40 Gew.-%, vorzugsweise 2 bis 30 Gew.-%, einer Mischung aus mindestens einem, vorzugsweise 1, 2 oder 3, Pigmentdispergatoren b1) der Formel (I) und mindestens einem, vorzugsweise 1, 2 oder 3, Pigmentdispergatoren b2) der Formel (II),
c) 0 bis 20 Gew.-%, vorzugsweise 0,1 bis 15 Gew.-% an oberflächenaktiven Mitteln und
d) 0 bis 20 Gew.-%, vorzugsweise 0,1 bis 10 Gew.-% an anderen üblichen Zusatzstoffen,

wobei die Anteile der jeweiligen Komponenten auf das Gesamtgewicht der Zubereitung (100 Gew.-%) bezogen sind.

Als oberflächenaktive Mittel kommen übliche anionische, kationische oder nichtionische Tenside oder Mischungen dieser Mittel in Betracht, als anionaktive Substanzen beispielsweise Fettsäuretauride, Fettsäure-N-methyltauride, Fettsäureisäthionate, Alkylbenzolsulfonate, Alkylnaphthalinsulfonate, Alkylphenolpolyglykolethersulfate und Fettalkoholpolyglykolethersulfate; Fettsäuren, z.B. Palmitin-, Stearin- und Ölsäure; Seifen, z.B. Alkalisalze von Fettsäuren, Naphthensäuren und Harzsäuren, z.B. Abietinsäure, alkalilösliche Harze, z.B. kolophoniummodifizierte Maleinatharze und Kondensationsprodukte auf Basis von Cyanurchlorid, Taurin, N,N-Dialkylaminoalkylamin, wie beispielsweise N,N-Diethylaminopropylamin, und p-Phenylendiamin; bevorzugt sind Harzseifen, d.h. Alkalisalze von Harzsäuren. Als kationaktive Substanzen kommen beispielsweise quarternäre Ammoniumsalze, Fettaminoxethylate, Fettaminpolyglykolether und Fettamine in Betracht. Als nichtionogene Substanzen kommen beispielsweise Aminoxide, Fettalkoholpolyglykolether, Fettsäurepolyglykolester und Alkylphenolpolyglykolether in Betracht.

Bei den erfindungsgemäßen Pigmentzubereitungen handelt es sich in der Regel um feste Systeme von rieselfähiger, pulverförmiger Beschaffenheit oder um Granulate.

Der erfindungsgemäß erzielbare Dispergiereffekt beruht vermutlich auf einer Modifizierung der Oberflächenstruktur der Basispigmente mit den Pigmentdispergatoren gemäß b1) und b2). So sind in einer Reihe von Fällen die Wirksamkeit der Pigmentdispergatoren gemäß b1) und b2) und die Qualität der damit erzeugten Pigmentzubereitungen abhängig vom Zeitpunkt der Zugabe der Pigmentdispergatoren gemäß b1) und b2) im Herstellungsprozess des Basispigments. Die Pigmentdispergatoren gemäß b1) und b2) können gleichzeitig, oder zu verschiedenen Zeitpunkten zugegeben werden oder können vor der Zugabe gemischt werden.

Die Wirksamkeit der Pigmentdispergatoren gemäß b1) und b2) kann auch von ihrer Teilchengröße und Teilchenform sowie vom Umfang der belegbaren Pigmentoberfläche abhängen. Es kann vorteilhaft sein, die Pigmentdispergatoren gemäß b1) und b2) erst im in Aussicht genommenen Anwendungsmedium dem Basispigment zuzufügen.

Die jeweilige optimale Konzentration der Pigmentdispergatoren gemäß b1) und b2) muß durch orientierende Vorversuche ermittelt werden, da die Verbesserung der Eigenschaften der Basispigmente nicht immer linear mit der Pigmentdispergatormenge einhergeht.

Die erfindungsgemäßen Pigmentzubereitungen können Mischungen von einem oder mehreren, vorzugsweise 1 oder 2, Basispigmenten mit einem oder mehreren, vorzugsweise 1 oder 2, der Pigmentdispergatoren gemäß b1) und mit einem oder mehreren, vorzugsweise 1 oder 2, der Pigmentdispergatoren gemäß b2) sein. Gegenstand der Erfindung ist auch ein Verfahren zur Herstellung einer erfindungsgemäßen Pigmentzubereitung, dadurch gekennzeichnet, daß man den oder die Pigmentdispergator(en) gemäß b1), den oder die Pigmentdispergator(en) gemäß b2) und das oder die Basispigment(e) miteinander mischt oder an einem beliebigen Zeitpunkt ihres Herstellungsprozesses aufeinander einwirken läßt.

Der Herstellungsprozeß eines organischen Pigments umfaßt dessen Synthese, gegebenenfalls Feinverteilung, z.B. durch Mahlung oder Umfällen, gegebenenfalls Finish, sowie die Isolierung als Preßkuchen oder als trockenes Granulat oder Pulver. Beispielsweise können die Pigmentdispergatoren gemäß b1) und b2) vor oder während der Pigmentsynthese, unmittelbar vor oder während eines Feinverteilungsprozesses oder eines anschließenden Finish zugegeben werden. Dabei können Temperaturen von beispielsweise 0 bis 200 °C auftreten. Selbstverständlich können die Pigmentdispergatoren gemäß b1) und b2) auch in Teilportionen zu unterschiedlichen Zeiten zugegeben werden.

Die Zugabe der Pigmentdispergatoren gemäß b1) und b2) im Rahmen eines Feinverteilungsprozesses erfolgt beispielsweise vor oder während einer Trockenmahlung eines Rohpigments mit oder ohne zusätzliche Mahlhilfsmittel auf einer Roll- oder Schwingmühle, oder vor oder während einer Naßmahlung eines Rohpigments in wäßrigem, wäßrig-organischem oder organischem Mahlmedium, beispielsweise auf einer Perlmühle.

Gleichfalls bewährt hat sich die Zugabe der Pigmentdispergatoren gemäß b1) und b2) vor oder nach eines Finishs des Basispigments in wäßrigem, wäßrigalkalischem, wäßrig-organischem oder organischem Medium.

Die Pigmentdispergatoren gemäß b1) und b2) können auch dem wasserfeuchten Pigmentpreßkuchen vor der Trocknung zugesetzt und eingearbeitet werden, wobei die Pigmentdispergatoren gemäß b1) und b2) selbst ebenfalls als Preßkuchen vorliegen können. Es ist weiterhin möglich, Trockenmischungen von Pulvern oder Granulaten der Pigmentdispergatoren gemäß b1) und b2) mit dem Pulver oder Granulat eines oder mehrerer Basispigmente vorzunehmen.

Weiterhin ist es möglich, einen oder mehrere Pigmentdispergator(en) gemäß b1) und b2) und ein Perylenpigment durch Umsetzung von Verbindungen der Formel (IV) und/oder (VI) mit einem Amin der Formel (VII)

$$H_2N—Z_4 \qquad (VII)$$

als Mischung zu synthetisieren, so daß man direkt zur Pigmentzubereitung gelangt.

Die nach der vorliegenden Erfindung erhältlichen Pigmentzubereitungen zeichnen sich aus durch ihre hervorragenden coloristischen und rheologischen Eigenschaften, insbesondere durch eine hervorragende Rheologie, hohe Flockungsstabilität, hohe Transparenz, leichte Dispergierbarkeit, gutes Glanzverhalten, hohe Farbstärke, einwandfreie Überlackier- und Lösemittelechtheiten sowie sehr gute Wetterechtheit. Sie sind für den Einsatz sowohl in lösemittelhaltigen als auch in wäßrigen Systemen geeignet.

Die erfindungsgemäß hergestellten Pigmentzubereitungen lassen sich zum Pigmentieren von hochmolekularen organischen Materialien natürlicher oder synthetischer Herkunft einsetzen,z.B. von Kunststoffen, Harzen, Lakken, Anstrichfarben oder elektrophotographischen Tonem und Entwicklern, sowie von Tinten und Druckfarben.

Hochmolekulare organische Materialien, die mit den genannten Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Blend oder in Form von Präparationen oder Dispersionen zu benutzen. Bezogen auf das zu pigmentierende, hochmolekulare organische Material setzt man die erfindungsgemäßen Pigmentzubereitungen in einer Menge von vorzugsweise 0,05 bis 30 Gew.-%, vorzugsweise 0,1 bis 10 Gew.-% ein.

Die erfindungsgemäßen Pigmentzubereitungen sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (Lit: L.B. Schein, "Electrophotography and Development Physics"; Springer Series in Electrophysics 14, Springer Verlag, 2nd edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäßen Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J. F. Hughes, "Electrostatics Powder Coating" Research Studies, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentzubereitungen als Farbmittel in Ink-Jet Tinten auf wäßriger und nichtwäßriger Basis sowie in solchen Tinten, die nach dem hot-melt-Verfahren arbeiten, geeignet.

Weiterhin sind die erfindungsgemäßen Pigmentzubereitungen auch als Farbmittel für Farbfilter sowohl für die additive wie subtraktive Farberzeugung geeignet. Es ist auch möglich, daß erst im Anwendungsmedium die Pigmentdispergatoren gemäß b1) und b2) dem Basispigment, oder umgekehrt, zugegeben werden. Gegenstand der Erfindung ist daher auch eine Pigmentpräparation, bestehend im wesentlichen aus dem besagten Basispigment, den besagten Pigmentdispergatoren gemäß b1) und b2), dem besagten hochmolekularen organischen Material, insbesondere Lack, gegebenenfalls oberflächenaktiven Mittel und/oder weiteren üblichen Zusatzstoffen. Die Gesamtmenge an Basispigment plus Pigmentdispergatoren gemäß b1) und b2) ist 0,05 bis 30 Gew.-%, vorzugsweise 0,1 bis 10 Gew.-%, bezogen auf das Gesamtgewicht der Pigmentpräparation.

Zur Beurteilung der Eigenschaften der nach der Erfindung hergestellten Pigmentzubereitungen auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und eines Melaminharzes, ein High-Solid-Acrylharzeinbrennlack auf Basis einer nichtwäßrigen Dispersion (HS) sowie ein wäßriger Lack auf Polyurethanbasis (PUR) ausgewählt.

Die Bestimmung der Farbstärke und des Farbtons erfolgte nach DIN 55986.

Die Rheologie des Mahlguts nach der Dispergierung (Millbase-Rheologie) wurde visuell anhand der folgenden fünfstufigen Skala bewertet

5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt. Die Bestimmung der Lösemittelechtheit erfolgte nach DIN 55976. Die Bestimmung der Überlackierechtheit erfolgte nach DIN 53221.

In den nachfolgenden Beispielen beziehen sich Teile jeweils auf Gewichtsteile und Prozente jeweils auf Gewichtsprozente der so beschriebenen Substanzen.

Beispiel 1a

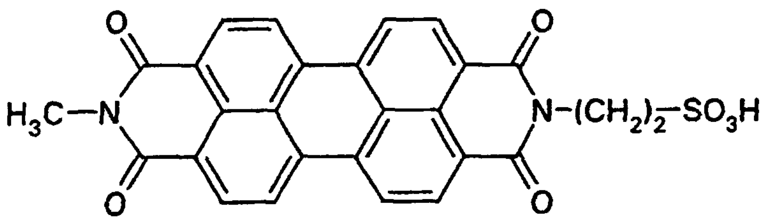

(XX)

In einem Autoklaven werden 1200 Teile Wasser vorgelegt und 50,1 Teile Taurin eingetragen und gelöst. Durch weitere Zugabe von 26,4 Teilen Kaliumhydroxid (85 %ig) wird in dieser Lösung ein pH-Wert von 9.6 eingestellt. Anschließend trägt man 40,5 Teile Perylen-3,4,9,10-tetracarbonsäuremonoanhydrid-N-monomethylimid ein. Es wird auf 150 °C geheizt und 3 Stunden bei 150°C gerührt. Nach dem Abkühlen auf 25 °C wird das als K-Salz gebildete Umsetzungsprodukt abgesaugt, mit Wasser gewaschen und bei 80°C getrocknet. Der erhaltene Rückstand wird bei 25°C zunächst in 1000 Teilen 100 %ige Schwefelsäure eingebracht und gelöst.
Danach werden dieser Lösung noch 850 Teile 50 %ige Schwefelsäure tropfenweise zugefügt, wobei die Temperatur bis 80°C ansteigen darf. Anschließend läßt man auf 25°C abkühlen; die so freigesetzte Sulfonsäure wird abgesaugt, mit 78 %iger Schwefelsäure gewaschen, danach mit 31 %iger Salzsäure sulfatfrei gewaschen und im Vakuum bei 80°C getrocknet.
Man erhält 44,9 Teile Pigmentdispergator der Formel XX, die 1,9 % Wasser enthält, entsprechend 44,0 Teile 100 %ig (= 85,9 % d.Th.).
Analyse: Unter Berücksichtigung von 1,9 % Wasser

| | |
|---|---|
| Ber.: | 63,3 % C |
| Gef.: | 63,0 % C |

Beispiel 1b

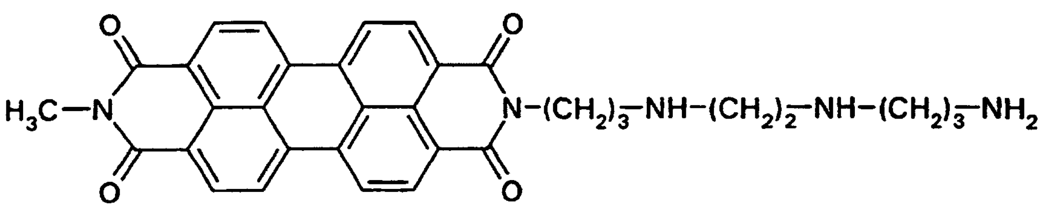

(XXI)

In einem Autoklaven werden 500 Teile Wasser vorgelegt, 40,5 Teile Perylen-3,4,9,10-tetracarbonsäuremonoanhydridmonomethylimid eingetragen und 52,2 Teile N,N'-Bis(3-aminopropyl)ethylendiamin zugegeben. Anschließend wird unter Druck auf 150°C erhitzt und 5 Stunden bei 150°C gerührt. Nach dem Abkühlen auf 25°C wird der Pigmentdispergator abgesaugt und mit Wasser neutral gewaschen.
Man erhält 132,2 Teile Presskuchen Pigmentdispergator 34,8 %ig. Ein Teil wird bei 80°C getrocknet.

| | |
|---|---|
| Analyse: | Ber.: 70,6 % C |
| | Gef.: 71,1 % C |

$^1$H-NMR ($D_2SO_4$): δ 8,7; 6,3; 5,7; 4,5; 4,2; 3,5; 3,2; 3,1; 2,0 ppm.

Beispiel 1c

10 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 0,45 Teilen Pigmentdispergator der Formel XX, hergestellt gemäß Beipiel 1a, und mit 0,45 Teilen Pigmentdispergator der Formel XXI, hergestellt gemäß Beispiel 1b, mechanisch gemischt.
Man erhält eine Pigmentzubereitung, die im HS-Lack transparente und farbstarke Lackierungen liefert. Die Rheologie wird mit 4 bis 5 bewertet und die Viskosität beträgt 3,2 s. Die Glanzmessung ergibt den Wert 58. Die Metalliclackierung ist farbstark und brillant.
Ohne Zusatz der beiden Pigmentdispergatoren sind die Lackierungen farbschwächer und wesentlich deckender. Die Rheologie wird mit 1 bewertet und die Viskosität ist so hoch, daß sie mit dem Viskospatel nicht meßbar ist. Auch der Glanz ist durch die starke Flockung nicht meßbar. Die Metalliclackierung ist farbschwach und wesentlich weniger brillant.

Beispiel 2a

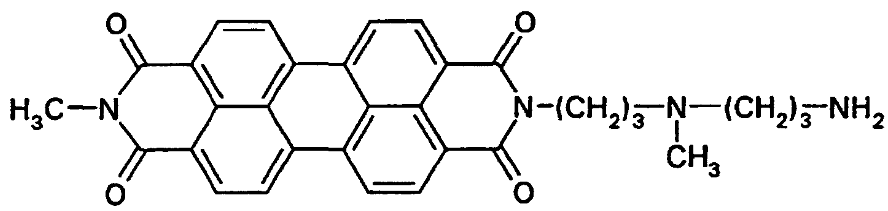

(XXII)

In einem Autoklaven werden 900 Teile Wasser vorgelegt, 40,5 Teile Perylen-3,4,9,10-tetracarbonsäuremonoanhydridmonomethylimid eingetragen und 40,8 Teile N,N-Bis(3-aminopropyl)methylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 190,3 Teile Presskuchen Pigmentdispergator 21 %ig. Ein Teil wird bei 80°C getrocknet.

| | |
|---|---|
| Analyse: | Ber.: 72,2 % C |
| | Gef.: 72,5 % C |

$^1$H-NMR ($D_2SO_4$): δ 8,7; 4,2; 3,5; 3,1; 3,0; 2,8; 2,6; 2,0 ppm.

Beispiel 2b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel XXII, hergestellt gemäß Beispiel 2a, mechanisch gemischt.
Man erhält eine Pigmentzubereitung, die im HS-Lack transparente und farbstarke Lackierungen liefert. Die Rheologie wird mit 4 bewertet und die Viskosität beträgt 2,8 s. Die Glanzmessung ergibt den Wert 71. Die Metalliclackierung ist farbstark und brillant.

Beispiel 3a

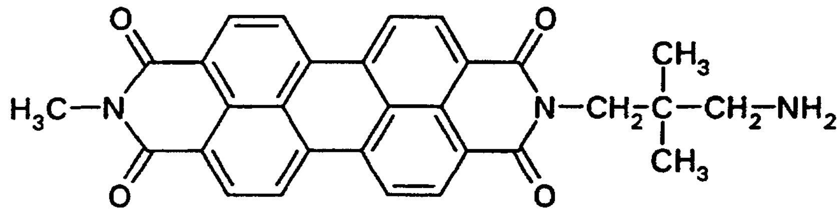

(XXIII)

In einem Autoklaven werden 900 Teile Wasser vorgelegt, 40,5 Teile Perylen-3,4,9,10-tetracarbonsäuremonoanhydridmonomethylimid eingetragen und 40,8 Teile Neopentandiamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 308,1 Teile Presskuchen Pigmentdispergator 15,1 %ig. Ein Teil wird bei 80 °C getrocknet.

| | |
|---|---|
| Analyse: | Ber.: 8,6 % N |
| | Gef.: 8,1 % N |

$^1$H-NMR ($D_2SO_4$): δ 8,7; 3,5; 0,9 ppm.

Beispiel 3b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel XXIII, hergestellt gemäß Beispiel 3a, mechanisch gemischt.
Man erhält eine Pigmentzubereitung, die im HS-Lack transparente und farbstarke Lackierungen liefert. Die Rheologie wird mit 4 bewertet und die Viskosität beträgt 3,3 s. Die Glanzmessung ergibt den Wert 70. Die Metalliclackierung ist farbstark und brillant.

Beispiel 3c (Vergleichsbeispiel: ohne den sauren Dispergator)

Wird nur der Pigmentdispergator der Formel XXIII, hergestellt gemäß Beipiel 3a, mechanisch mit dem handelsüblichen Pigment (C.I. Pigment Red 179) gemischt, sind die Lackierungen im Vergleich zu denen aus Beispiel 3b deckender. Die Rheologie wird mit 1 bis 3 bewertet und die Viskosität ist so hoch, daß sie mit dem Viskospatel nicht meßbar ist. Auch der Glanz ist durch die starke Flockung nicht meßbar.

Beispiel 4a

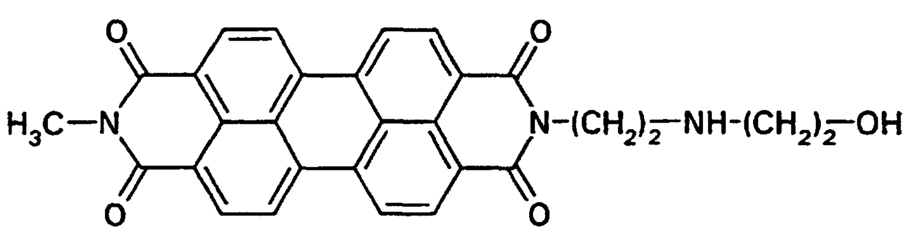

(XXIV)

In einem Autoklaven werden 900 Teile Wasser vorgelegt, 40,5 Teile Perylen-3,4,9,10-tetracarbonsäuremonoanhydridmonomethylimid eingetragen und 41,6 Teile N-(2-Aminoethyl)ethanolamin zugegeben. Anschließend wird

unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 121,9 Teile Presskuchen Pigmentdispergator 38,5 %ig. Ein Teil wird bei 80 °C getrocknet.

Analyse: Ber.: 70,9 % C
Gef.: 71,0 % C

$^1$H-NMR ($D_2SO_4$): δ 8,7; 6,5; 4,5; 4,3; 3,5; 3,4; 3,3 ppm.

Beispiel 4b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel XXIV, hergestellt gemäß Beispiel 4a, mechanisch gemischt.
Man erhält eine Pigmentzubereitung, die im HS-Lack transparente und farbstarke Lackierungen liefert. Die Rheologie wird mit 4 bewertet und die Viskosität beträgt 3,1 s. Die Glanzmessung ergibt den Wert 47.

Beispiel 4c (Vergleichsbeispiel: ohne den sauren Dispergator)

Wird nur der Pigmentdispergator der Formel XXIV, hergestellt gemäß Beipiel 4a, mechanisch mit dem handelsüblichen Pigment (C.I. Pigment Red 179) gemischt, sind die Lackierungen im Vergleich zu denen aus Beispiel 4b deckender. Die Rheologie wird mit 3 bewertet und die Viskosität ist so hoch, daß sie mit dem Viskospatel nicht meßbar ist. Auch der Glanz ist durch die starke Flockung nicht meßbar.

Beispiel 5a

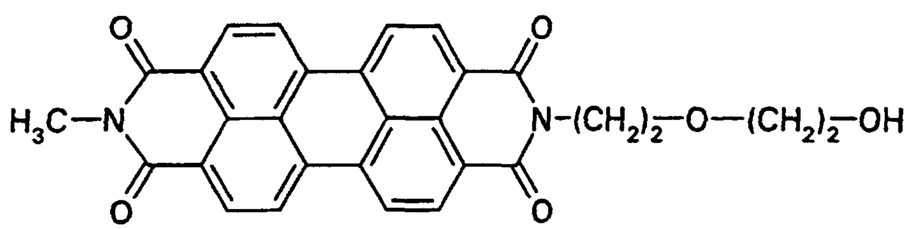

(XXV)

In einem Autoklaven werden 900 Teile Wasser vorgelegt, 40,5 Teile Perylen-3,4,9,10-tetracarbonsäuremonoanhydridmonomethylimid eingetragen und 42 Teile 2-(2-Aminoethoxy)ethanol zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 221,3 Teile Presskuchen Pigmentdispergator 21,4 %ig. Ein Teil wird bei 80 °C getrocknet.

Analyse: Ber.: 70,7 % C
Gef.: 70,5 % C

$^1$H-NMR ($D_2SO_4$): δ 8,7; 5,2; 4,4; 4,2; 3,5 ppm.

Beispiel 5b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel XXV, hergestellt gemäß Beispiel 5a, mechanisch gemischt.
Man erhält eine Pigmentzubereitung, die im HS-Lack transparente und farbstarke Lackierungen liefert. Die Rheologie

wird mit 4 bewertet und die Viskosität beträgt 5,4 s. Die Glanzmessung ergibt den Wert 54.
Im PUR-Lack erhält man farbstarke und transparente Lackierungen. Die Metalliclackierung ist brillant. Ohne Zusatz der beiden Dispergatoren sind die Färbungen farbschwächer und deckender, die Metalliclackierung ist nicht so brillant.

Beispiel 6a

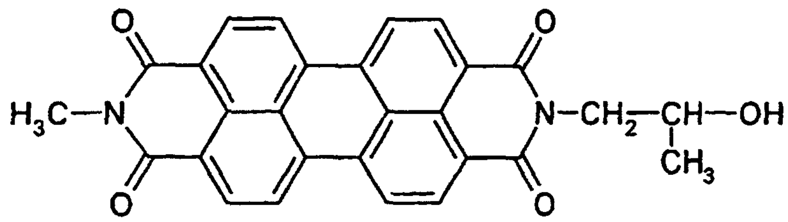

(XXVI)

In einem Autoklaven werden 900 Teile Wasser vorgelegt, 40,5 Teile Perylen-3,4,9,10-tetracarbonsäuremonoanhydridmonomethylimid eingetragen und 30 Teile Monoisopropanolamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 117,7 Teile Presskuchen Pigmentdispergator 38 %ig. Ein Teil wird bei 80 °C getrocknet.

Analyse: Ber.: 72,7 % C
Gef.: 72,8 % C

$^1$H-NMR ($D_2SO_4$): δ 8,7; 5,7; 4,5; 4,0; 3,5; 1,5 ppm.

Beispiel 6b

10 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 0,45 Teilen Pigmentdispergator der Formel XX, hergestellt gemäß Beipiel 1a, und mit 0,45 Teilen Pigmentdispergator der Formel XXVI, hergestellt gemäß Beispiel 6a, mechanisch gemischt.
Man erhält eine Pigmentzubereitung, die im HS-Lack transparente und farbstarke Lackierungen liefert. Die Rheologie wird mit 3 bewertet.

Beispiel 7a

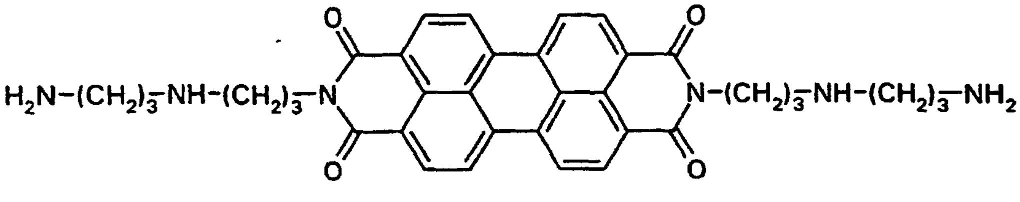

(XXVII)

In einem Autoklaven werden 300 Teile Wasser vorgelegt, 189,7 Teile Presskuchen Perylen-3,4,9,10-tetracarbonsäuredianhydrid 20,7 %ig eingetragen und 104,8 Teile Dipropylentriamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 435,3 Teile Presskuchen Pigmentdispergator 12,5 %ig. Ein Teil wird bei 80°C getrocknet.

Analyse: Ber.: 69,9 % C
Gef.: 68,2 % C

$^1$H-NMR ($D_2SO_4$): δ 8,6; 6,0; 5,6; 4,1; 2,9; 2,8; 1,9; 1,8 ppm.

Beispiel 7b

10 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 0,45 Teilen Pigmentdispergator der Formel XX, hergestellt gemäß Beipiel 1a, und mit 0,45 Teilen Pigmentdispergator der Formel XXVII, hergestellt gemäß Beispiel 7a, mechanisch gemischt.
Man erhält eine Pigmentzubereitung, die im HS-Lack transparente und farbstarke Lackierungen liefert. Die Rheologie wird mit 4 bewertet und die Viskosität beträgt 3,7 s. Die Glanzmessung ergibt den Wert 70. Die Metalliclackierung ist farbstark und brillant.

Beispiel 8a

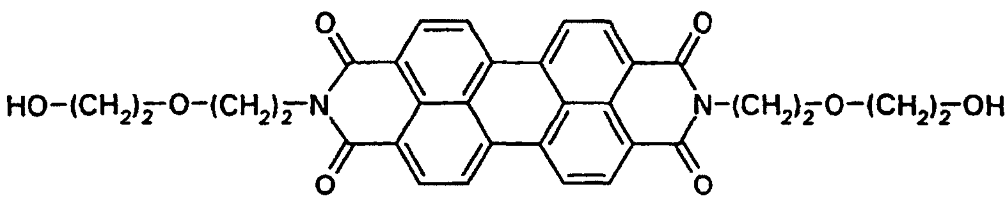

(XXVIII)

In einem Autoklaven werden 500 Teile Wasser vorgelegt, 181,9 Teile Presskuchen Perylen-3,4,9,10-tetracarbonsäuredianhydrid 21,5 %ig eingetragen und 42 Teile 2-(2-Aminoethoxy)-ethanol zugegeben. Anschließend wird unter Druck auf 150°C erhitzt und 5 Stunden bei 150 °C gerührt. Nach dem Abkühlen auf 25 °C wird der Pigmentdispergator abgesaugt und mit Wasser neutral gewaschen.
Man erhält 161,7 Teile Presskuchen Pigmentdispergator 38,4 %ig. Ein Teil wird bei 80°C getrocknet.

Analyse: Ber.: 67,8 % C
Gef.: 67,1 % C

$^1$H-NMR ($D_2SO_4$): δ 8,7; 5,2; 4,4; 3,7 ppm

Beispiel 8b

10 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 0,45 Teilen Pigmentdispergator der Formel XX, hergestellt gemäß Beipiel 1a, und mit 0,45 Teilen Pigmentdispergator der Formel XXVIII, hergestellt gemäß Beispiel 8a, mechanisch gemischt.
Man erhält eine Pigmentzubereitung, die im HS-Lack transparente und farbstarke Lackierungen liefert. Die Rheologie wird mit 3 bis 4 bewertet und die Viskosität beträgt 9,1 s. Die Glanzmessung ergibt den Wert 56. Die Lösemittelechtheit der Pigmentzubereitung ist sehr gut.

Beispiel 9a

In einem Autoklaven werden 900 Teile Wasser vorgelegt, 43,5 Teile Perylen-3,4,9,10-tetracarbonsäuremonoanhydridmonohydroxyethylimid eingetragen und 69,6 Teile N,N'-Bis(3-aminopropyl)ethylendiamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 199,2 Teile Presskuchen Pigmentdispergator 26,7 %ig. Ein Teil wird bei 80°C getrocknet.

Analyse: Ber.: 69,0 % C

Gef.: 69,3 % C

$^1$H-NMR ($D_2SO_4$): δ 8,6; 6,3; 6,2; 5,7; 5,2; 4,4; 4,2; 3,2; 3,0; 2,9; 2,8; 2,0; 1,8 ppm

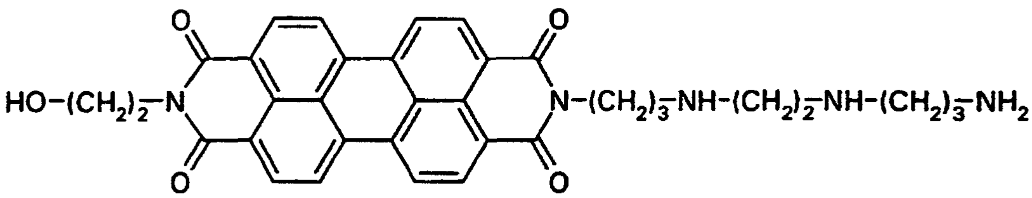

(XXIX)

Beispiel 9b

In einem Rührgefäß werden 500 Teile Wasser vorgelegt und unter Rühren 22,5 Teile Perylen-3,4,9,10-tetracarbonsäuredianhydrid und 4,49 Teile Presskuchen Pigmentdispergator 26,7 %ig der Formel XXIX, hergestellt gemäß Beispiel 9a, eingetragen. Zu dieser Suspension werden 2,4 Teile einer handelsüblichen 50 %igen wäßrigen Harzseife gegeben und, nach Abkühlen auf 0 bis 5 °C, während 5 Minuten 40,8 Teile einer 40 %igen wäßrigen Monomethylaminlösung zugetropft. Es wird noch 40 Minuten bei 0 bis 5 °C gerührt. Dann wird eine Lösung aus 12,8 Teilen Calciumchlorid*$2H_2O$ in 42,5 Teilen Wasser zugetropft und 1 Stunde bei 0 bis 5°C gerührt. Die Suspension wird auf 80 °C erhitzt und 1 Stunde bei 80 °C gerührt. Danach wird eine Suspension aus 1,2 Teilen Distearyldimethylammoniumchlorid und 70 Teilen Wasser zugetropft und eine Stunde bei 80 °C gerührt. Nach dem Abkühlen auf 50 °C wird bei dieser Temperatur Essigsäure zugetropft, bis ein pH-Wert von 8,5 erreicht ist. Die erhaltene Pigmentzubereitung wird abgesaugt, mit Wasser chloridionenfrei gewaschen und bei 80 °C im Umluftschrank getrocknet.
Man erhält 26,8 Teile Pigmentzubereitung, die mit 1,14 Teilen Pigmentdispergator der Formel XX, hergestellt gemäß Beipiel 1a, und mit 1,14 Teilen Pigmentdispergator der Formel XXIX hergestellt gemäß Beispiel 9a, mechanisch gemischt werden.
Man erhält eine Pigmentzubereitung, die im HS-Lack transparente und farbstarke Lackierungen liefert. Die Rheologie wird mit 4 bis 5 bewertet und die Viskosität beträgt 2,0 s. Die Glanzmessung ergibt den Wert 61. Die Metalliclackierung ist farbstark und brillant.

Beispiel 10a

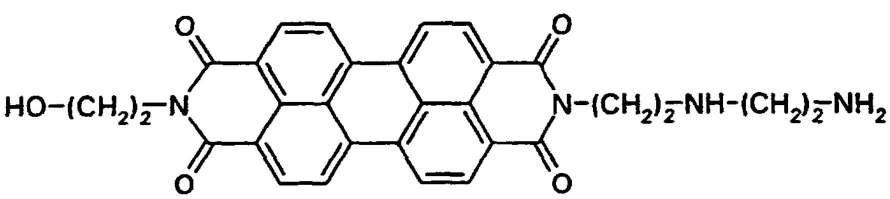

(XXX)

In einem Autoklaven werden 450 Teile Wasser vorgelegt, 21,5 Teile Perylen-3,4,9,10-tetracarbonsäuremonoanhydridmonohydroxyethylimid eingetragen und 20,6 Teile Diethylentriamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 76,5 Teile Presskuchen Pigmentdispergator 31,9 %ig. Ein Teil wird bei 80°C getrocknet.

Analyse: Ber.: 69,2 % C
Gef.: 70,1 % C

$^1$H-NMR ($D_2SO_4$): δ 8,7; 6,6; 6,5; 6,0; 5,1; 4,4; 3,4; 3,2 ppm

Beispiel 10b

Wie im Beispiel 9b wird eine Pigmentzubereitung hergestellt, mit dem Unterschied, daß statt des Pigmentdispergators der Formel XXIX der Pigmentdispergator der Formel XXX, hergestellt gemäß Beispiel 10a, verwendet wird. Man erhält eine Pigmentzubereitung, die im HS-Lack transparente und farbstarke Lackierungen liefert. Die Rheologie wird mit 4 bis 5 bewertet und die Viskosität beträgt 2,4 s. Die Glanzmessung ergibt den Wert 61. Die Metalliclackierung ist farbstark und brillant.
Im AM-Lack erhält man farbstarke und transparente Lackierungen. Die Rheologie wird mit 5 bewertet, die Viskosität beträgt 5,6 s. Die Glanzmessung ergibt den Wert 79. Ohne Zusatz der beiden Dispergatoren sind die Färbungen farbschwächer, die Rheologie wird mit 1 bis 3 bewertet und die Viskosität ist so hoch, daß sie mit dem Viskospatel nicht meßbar ist. Auch der Glanz ist wegen der starken Flockung nicht meßbar.

Beispiel 11a

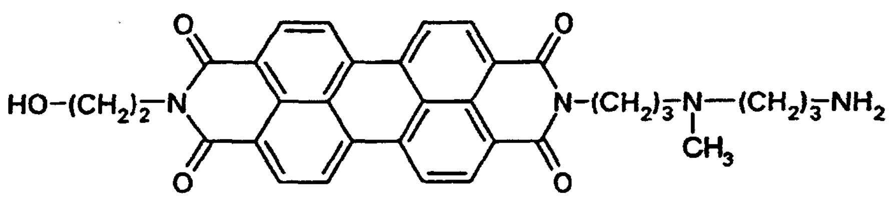

(XXXI)

In einem Autoklaven werden 900 Teile Wasser vorgelegt, 43,5 Teile Perylen-3,4,9,10-tetracarbonsäuremonoanhydridmonohydroxyethylimid eingetragen und 40,8 Teile N,N-Bis-(3-Aminopropyl)methylamin zugegeben. Anschließend wird unter Druck auf 150 °C erhitzt und 5 Stunden bei 150 °C gerührt. Nach dem Abkühlen auf 25°C wird der Pigmentdispergator abgesaugt und mit Wasser neutral gewaschen. Man erhält 136,4 Teile Presskuchen Pigmentdispergator 37 %ig. Ein Teil wird bei 80°C getrocknet.

Analyse: Ber.: 70,5 % C
Gef.: 71,0 % C

$^1$H-NMR ($D_2SO_4$): δ 8,7; 5,2; 4,4; 4,2; 2,9; 2,5; 2,0 ppm

Beispiel 11b

Wie im Beispiel 9b wird eine Pigmentzubereitung hergestellt, mit dem Unterschied, daß statt des Pigmentdispergators der Formel XXIX der Pigmentdispergator der Formel XXXI, hergestellt gemäß Beispiel 11a, verwendet wird. Man erhält eine Pigmentzubereitung, die im HS-Lack transparente und farbstarke Lackierungen liefert. Die Rheologie wird mit 4 bewertet und die Viskosität beträgt 3,4 s. Die Glanzmessung ergibt den Wert 59. Die Metalliclackierung ist farbstark und brillant.

Beispiel 12a

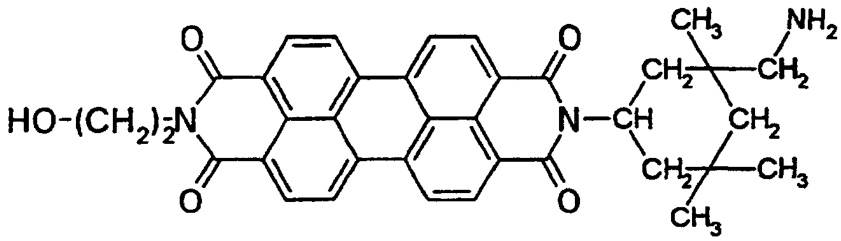

**(XXXII)**

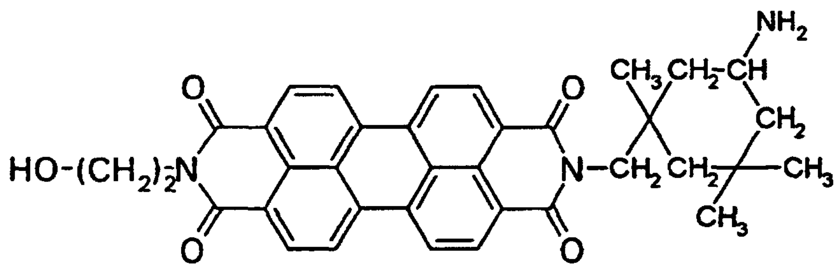

In einem Autoklaven werden 900 Teile Wasser vorgelegt, 43,5 Teile Perylen-3,4,9,10-tetracarbonsäuremonoanhydridmonohydroxyethylimid eingetragen und 68 Teile Isophorondiamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 337 Teile Presskuchen Pigmentdispergator 16.7 %ig, der aus einem Gemisch gemäß Formel XXXII besteht. Ein Teil wird bei 80 °C getrocknet

Analyse: Ber.: 73,6 % C
Gef.: 72,4 % C

$^1$H-NMR ($D_2SO_4$): δ 8,6; 5,5; 5,4; 5,2; 4,4; 4,0; 3,2; 2,6; 2,0; 1,6; 1,4; 1,1; 0,9; 0,8; 0,7; 0,6 ppm

Beispiel 12b

Wie im Beispiel 9b wird eine Pigmentzubereitung hergestellt, mit dem Unterschied, daß statt des Pigmentdispergators der Formel XXIX der Pigmentdispergator der Formel XXXII, hergestellt gemäß Beispiel 12a, verwendet wird. Man erhält eine Pigmentzubereitung, die im HS-Lack transparente und farbstarke Lackierungen liefert. Die Rheologie wird mit 4 bis 5 bewertet und die Viskosität beträgt 1,5 s. Die Glanzmessung ergibt den Wert 74. Die Metalliclackierung ist farbstark und brillant. Die Lösemittelechtheit der Pigmentzubereitung ist sehr gut.

Beispiel 13a

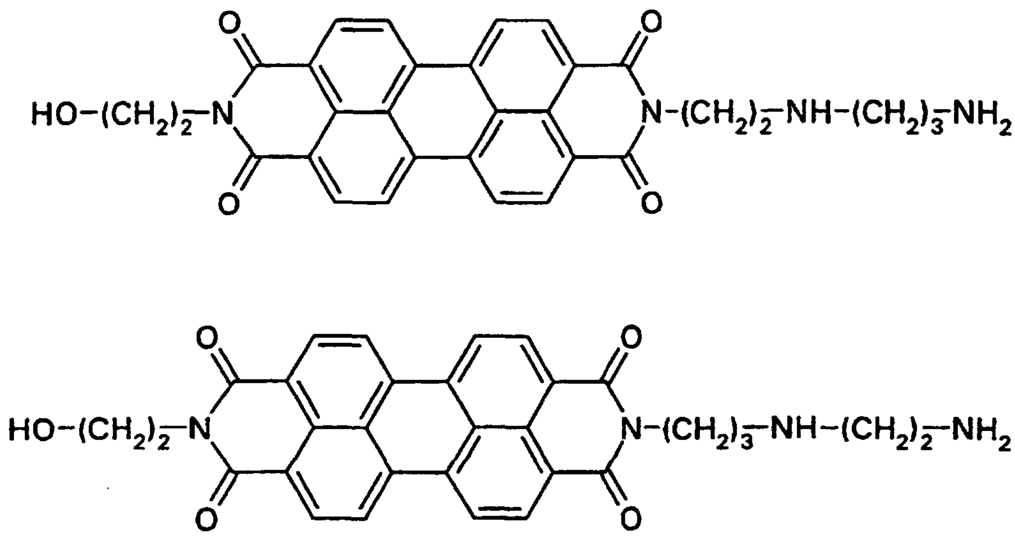

(XXXIII)

In einem Autoklaven werden 900 Teile Wasser vorgelegt, 43,5 Teile Perylen-3,4,9,10-tetracarbonsäuremonoanhydridmonohydroxyethylimid eingetragen und 46,8 Teile 3-(2-Aminoethyl)-aminopropylamin zugegeben. Anschließend wird unter Druck auf 150 °C erhitzt und 5 Stunden bei 150 °C gerührt. Nach dem Abkühlen auf 25°C wird der Pigmentdispergator abgesaugt und mit Wasser neutral gewaschen. Man erhält 317,6 Teile Presskuchen Pigmentdispergator 15,8 %ig, der aus einem Gemisch gemäß Formel XXXIII besteht. Ein Teil wird bei 80 °C getrocknet.

Analyse: Ber.: 69,7 % C
Gef.: 68,4 % C

$^1$H-NMR ($D_2SO_4$): δ 8,6; 6,3; 5,9; 5,7; 5,2; 4,4; 4,2; 3,3; 3,2; 3,1; 3,0; 2,8; 2,0; 1,8 ppm

Beispiel 13b

Wie im Beispiel 9b wird eine Pigmentzubereitung hergestellt, mit dem Unterschied, daß statt des Pigmentdispergators der Formel XXIX der Pigmentdispergator der Formel XXXIII hergestellt gemäß Beispiel 13a verwendet wird. Man erhält eine Pigmentzubereitung, die im HS-Lack transparente und farbstarke Lackierungen liefert. Die Rheologie wird mit 4 bewertet und die Viskosität beträgt 2,2 s. Die Glanzmessung ergibt den Wert 67. Die Metalliclackierung ist farbstark und brillant. Die Lösemittelechtheit der Pigmentzubereitung ist sehr gut.

Beispiel 14a

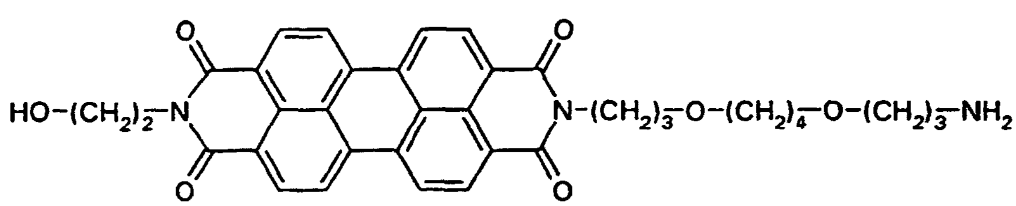

(XXXIV)

In einem Autoklaven werden 900 Teile Wasser vorgelegt, 43,5 Teile Perylen-3,4,9,10-tetracarbonsäuremonoanhydridmonohydroxyethylimid eingetragen und 81,6 Teile 4,9-Dioxadodecan-1,12-diamin zugegeben. Anschließend wird unter Druck auf 150 °C erhitzt und 5 Stunden bei 150 °C gerührt. Nach dem Abkühlen auf 25°C wird der Pigmentdispergator abgesaugt und mit Wasser neutral gewaschen.

Man erhält 294,4 Teile Presskuchen Pigmentdispergator 19 %ig. Ein Teil wird bei 80°C getrocknet.

Analyse: Ber.: 69,6 % C
Gef.: 69,8 % C

$^1$H-NMR ($D_2SO_4$): δ 8,6; 5,2; 4,7; 4,4; 4,3; 4,2; 4,1; 4,0; 2,7; 2,2; 2,0; 1,91,5 ppm

Beispiel 14b

Wie im Beispiel 9b wird eine Pigmentzubereitung hergestellt, mit dem Unterschied, daß statt des Pigmentdispergators der Formel XXIX der Pigmentdispergator der Formel XXXIV hergestellt gemäß Beispiel 14a verwendet wird. Man erhält eine Pigmentzubereitung, die im HS-Lack transparente und farbstarke Lackierungen liefert. Die Rheologie wird mit 4 bewertet und die Viskosität beträgt 2,6 s. Die Glanzmessung ergibt den Wert 66. Die Metalliclackierung ist farbstark und brillant. Die Lösemittelechtheit der Pigmentzubereitung ist sehr gut.

Beispiel 15a

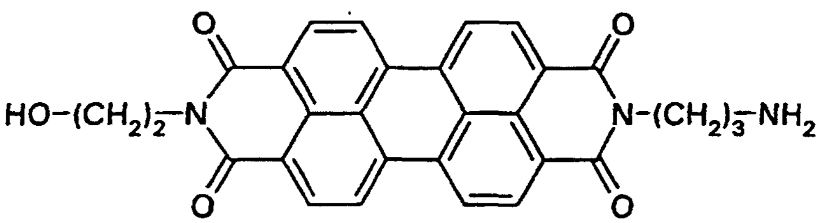

(XXXV)

In einem Autoklaven werden 900 Teile Wasser vorgelegt, 43,5 Teile Perylen-3,4,9,10-tetracarbonsäuremonoanhydridmonohydroxyethylimid eingetragen und 29,6 Teile 1,3-Diaminopropan zugegeben. Anschließend wird unter Druck auf 150°C erhitzt und 5 Stunden bei 150 °C gerührt. Nach dem Abkühlen auf 25°C wird der Pigmentdispergator abgesaugt und mit Wasser neutral gewaschen.
Man erhält 391,1 Teile Presskuchen Pigmentdispergator 10,7 %ig. Ein Teil wird bei 80°C getrocknet.

Analyse: Ber.: 8,6 % N
Gef.: 8,7 % N

$^1$H-NMR ($D_2SO_4$): δ 8,7; 5,2; 4,4; 4,0; 3,6; 2,8; 1,7 ppm

Beispiel 15b

Wie im Beispiel 9b wird eine Pigmentzubereitung hergestellt, mit dem Unterschied, daß statt des Pigmentdispergators der Formel XXIX der Pigmentdispergator der Formel XXXV, hergestellt gemäß Beispiel 15a, verwendet wird. Man erhält eine Pigmentzubereitung, die im HS-Lack transparente und farbstarke Lackierungen liefert. Die Rheologie wird mit 4 bewertet und die Viskosität beträgt 2,8 s. Die Glanzmessung ergibt den Wert 68. Die Metalliclackierung ist farbstark und brillant.
Im PUR-Lack erhält man farbstarke und transparente Lackierungen. Die Metalliclackierung ist brillant. Ohne Zusatz der beiden Dispergatoren sind die Färbungen farbschwächer und deckender, die Metalliclackierung ist nicht so brillant.

Beispiel 16a

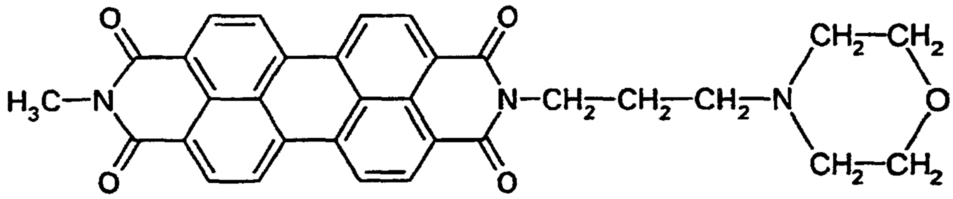

(XXXVI)

In einem Autoklaven werden 900 Teile Wasser vorgelegt, 40,5 Teile Perylen-3,4,9,10-tetracarbonsäuremonoanhydridmonomethylimid eingetragen und 57,6 Teile N-(3-Aminopropyl)-morpholin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 330,5 Teile Presskuchen Pigmentdispergator 16,8 %ig. Ein Teil wird bei 80 °C getrocknet.

Analyse: Ber.: 7,9 % N
Gef.: 7,7 % N

$^1$H-NMR ($D_2SO_4$): δ 8,7; 4,2; 3,9; 3,6; 3,5; 3,2; 3,0; 2,9; 2,0 ppm.

Beispiel 16b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel XXXVI, hergestellt gemäß Beispiel 16a, mechanisch gemischt.
Man erhält eine Pigmentzubereitung, die im HS-Lack transparente und farbstarke Lackierungen liefert. Die Rheologie wird mit 3 bewertet.
Im PUR-Lack erhält man farbstarke und transparente Lackierungen. Die Metalliclackierung ist brillant. Ohne Zusatz der beiden Dispergatoren sind die Färbungen farbschwächer und deckender, die Metalliclackierung ist nicht so brillant.

Beispiel 17a

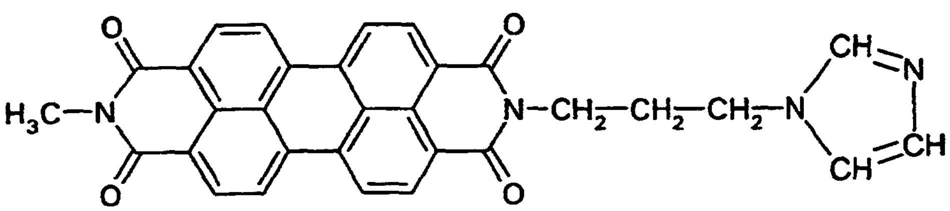

(XXXVII)

In einem Autoklaven werden 900 Teile Wasser vorgelegt, 40,5 Teile Perylen-3,4,9,10-tetracarbonsäuremonoanhydridmonomethylimid eingetragen und 50 Teile 1-(3-Aminopropyl)-imidazol zugegeben. Anschließend wird unter Druck auf 150 °C erhitzt und 5 Stunden bei 150°C gerührt. Nach dem Abkühlen auf 25 °C wird der Pigmentdispergator abgesaugt und mit Wasser neutral gewaschen.
Man erhält 164 Teile Presskuchen Pigmentdispergator 31,4 %ig. Ein Teil wird bei 80°C getrocknet.

Analyse: Ber.: 10,9 % N
Gef.: 10,9 % N

$^{1}H$-NMR ($D_2SO_4$): δ 8,7; 8,0; 7,0; 4,1; 4,0; 3,5; 2,1 ppm.

Beispiel 17b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel XXXVII, hergestellt gemäß Beispiel 17a, mechanisch gemischt.
Man erhält eine Pigmentzubereitung, die im HS-Lack transparente und farbstarke Lackierungen liefert. Die Rheologie wird mit 4 bis 5 bewertet. Die Lösemittelechtheit der Pigmentzubereitung ist sehr gut.

Beispiel 18a

In einem Autoklaven werden 900 Teile Wasser vorgelegt, 40,5 Teile Perylen-3,4,9,10-tetracarbonsäuremonoanhydridmonomethylimid eingetragen und 51,6 Teile N-(2-Aminoethyl)-piperazin zugegeben. Anschließend wird unter Druck auf 150°C erhitzt und 5 Stunden bei 150 °C gerührt. Nach dem Abkühlen auf 25 °C wird der Pigmentdispergator abgesaugt und mit Wasser neutral gewaschen.
Man erhält 133,5 Teile Presskuchen Pigmentdispergator 39,4 %ig. Ein Teil wird bei 80°C getrocknet.

Analyse: Ber.: 10,6 % N
Gef.: 10,3 % N

$^{1}H$-NMR ($D_2SO_4$): δ 8,7; 6,6; 6,4; 4,5; 3,8; 3,5; 3,2 ppm.

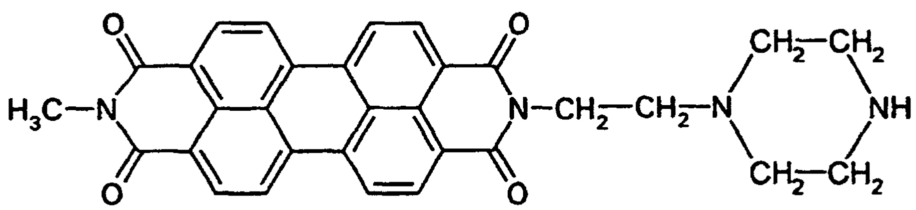

(XXXVIII)

Beispiel 18b

30 Teile eines handelsüblichen Pigments (C.I. Pigment Red 179), das aus Perylen-3,4,9, 10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel XXXVIII, hergestellt gemäß Beispiel 18a, mechanisch gemischt.
Man erhält eine Pigmentzubereitung, die im HS-Lack transparente und farbstarke Lackierungen liefert. Die Rheologie wird mit 4 bis 5 bewertet.

Beispiel 19a

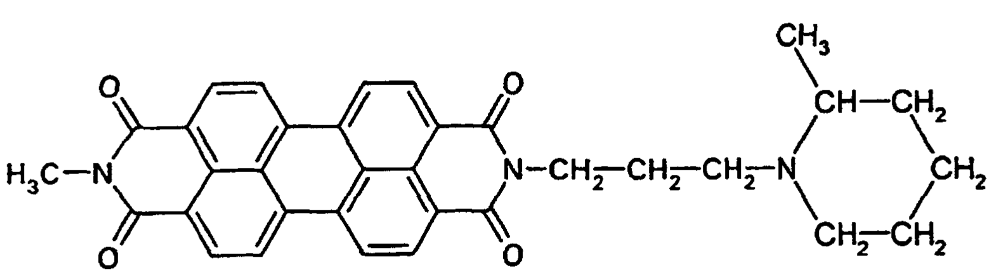

(XXXIX)

In einem Autoklaven werden 900 Teile Wasser vorgelegt, 40,5 Teile Perylen-3,4,9,10-tetracarbonsäuremonoanhydridmonomethylimid eingetragen und 62,4 Teile 1-(3-Aminopropyl)-2-pipecolin zugegeben. Anschließend wird unter Druck auf 150°C erhitzt und 5 Stunden bei 150 °C gerührt. Nach dem Abkühlen auf 25°C wird der Pigmentdispergator abgesaugt und mit Wasser neutral gewaschen.
Man erhält 189,8 Teile Presskuchen Pigmentdispergator 31,1 %ig. Ein Teil wird bei 80°C getrocknet.

Analyse: Ber.: 7,7 % N
Gef.: 7,7 % N

$^1$H-NMR ($D_2SO_4$): δ 8,7; 4,1; 3,5; 3,1; 2,8; 2,5; 1,9; 1,3 ppm.

Beispiel 19b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel XXXIX, hergestellt gemäß Beispiel 19a, mechanisch gemischt. Man erhält eine Pigmentzubereitung, die im HS-Lack transparente und farbstarke Lackierungen liefert. Die Rheologie wird mit 3 bewertet. Die Lösemittelechtheit der Pigmentzubereitung ist sehr gut.

Beispiel 20a

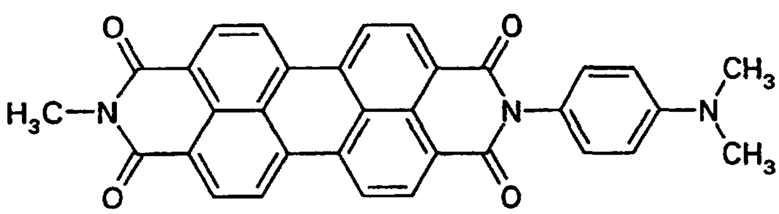

(L)

In einem Autoklaven werden 900 Teile Wasser vorgelegt, 40,5 Teile Perylen-3,4,9,10-tetracarbonsäuremonoanhydridmonomethylimid eingetragen und 54,4 Teile N,N-Dimethyl-p-phenylendiamin zugegeben. Anschließend wird unter Druck auf 150°C erhitzt und 5 Stunden bei 150 °C gerührt. Nach dem Abkühlen auf 25 °C wird der Pigmentdispergator abgesaugt und mit Wasser neutral gewaschen.
Man erhält 69,6 Teile Presskuchen Pigmentdispergator 76,1 %ig. Ein Teil wird bei 80°C getrocknet.

Analyse: Ber.: 8,0 % N
Gef.: 8,3 % N

$^1$H-NMR ($D_2SO_4$): δ 8,7; 7,5; 7,4; 3,5; 3,0 ppm.

Beispiel 20b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel L, hergestellt gemäß Beispiel 20a, mechanisch gemischt.
Man erhält eine Pigmentzubereitung, die im HS-Lack transparente und farbstarke Lackierungen liefert. Die Rheologie wird mit 3 bis 4 bewertet.

Beispiel 21a

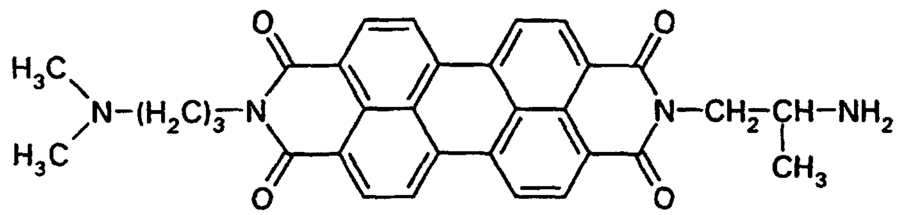

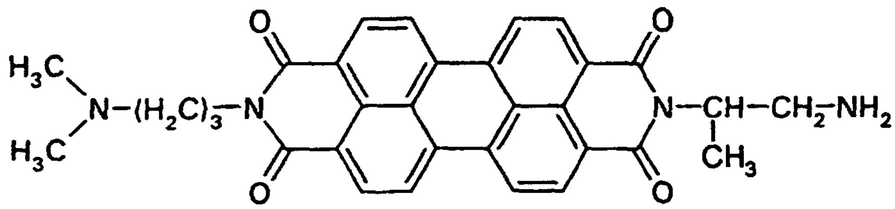

(LI)

In einem Autoklaven werden 900 Teile Wasser vorgelegt, 47,6 Teile Perylen-3,4,9, 10-tetracarbonsäuremonoanhydridmono-N,N-dimethylaminopropylimid eingetragen und 29,6 Teile 1,2-Diaminopropan zugegeben. Anschließend wird unter Druck auf 150 °C erhitzt und 5 Stunden bei 150 °C gerührt Nach dem Abkühlen auf 25°C wird der Pigmentdispergator abgesaugt und mit Wasser neutral gewaschen. Man erhält 103,8 Teile Presskuchen Pigmentdispergator 46 %ig, der aus einem Gemisch gemäß Formel LI besteht. Ein Teil wird bei 80 °C getrocknet.

Analyse: Ber.: 10,5 % N
Gef.: 10,3 % N

$^1$H-NMR ($D_2SO_4$): δ 8,7; 4,6; 4,2; 2,9; 2,5; 2,2: 1,9; ppm.

Beispiel 21b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel LI, hergestellt gemäß Beispiel 21a, mechanisch gemischt. Man erhält eine Pigmentzubereitung, die im HS-Lack transparente und farbstarke Lackierungen liefert. Die Rheologie wird mit 3 bis 4 bewertet.

Beispiel 22a

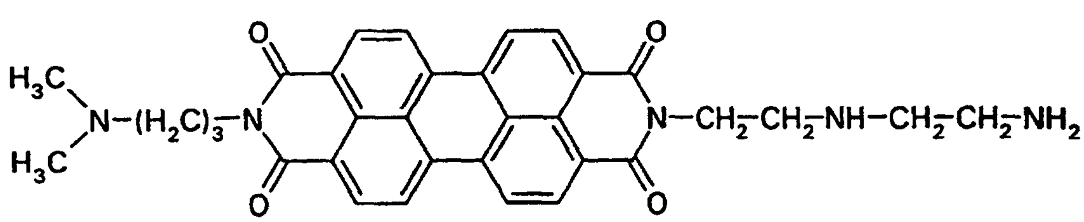

(LII)

In einem Autoklaven werden 900 Teile Wasser vorgelegt, 47,6 Teile Perylen-3,4,9,10-tetracarbonsäuremonoanhydridmono-N,N-dimethylaminopropylimid eingetragen und 41,2 Teile Diethylentriamin zugegeben. Anschließend wird unter Druck auf 150 °C erhitzt und 5 Stunden bei 150 °C gerührt. Nach dem Abkühlen auf 25°C wird der Pigmentdispergator abgesaugt und mit Wasser neutral gewaschen. Man erhält 354,9 Teile Presskuchen Pigmentdispergator 14,5 %ig. Ein Teil wird bei 80°C getrocknet.

Analyse: Ber.: 70,6 % C
Gef.: 70,2 % C

$^1$H-NMR ($D_2SO_4$): δ 8,7; 6,0; 4,4; 4,1; 3,4; 3,2; 2,9; 2,5; 2,2: 1,9; ppm.

Beispiel 22b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel LII, hergestellt gemäß Beispiel 22a, mechanisch gemischt. Man erhält eine Pigmentzubereitung, die im HS-Lack transparente und farbstarke Lackierungen liefert. Die Rheologie wird mit 4 bis 5 bewertet. Auch im PE-Lack erhält man farbstarke und transparente Lackierungen.

Beispiel 23a

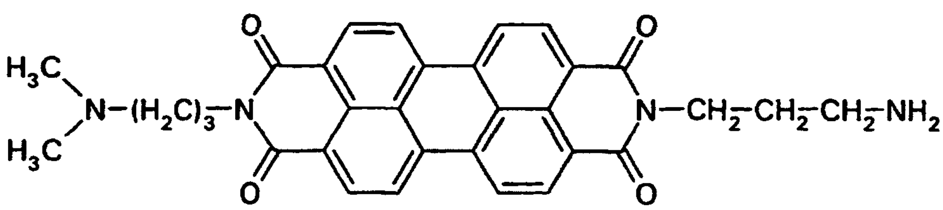

(LIII)

In einem Autoklaven werden 900 Teile Wasser vorgelegt, 47,6 Teile Perylen-3,4,9,10-tetracarbonsäuremonoanhydridmono-N,N-dimethylaminopropylimid eingetragen und 29,6 Teile 1,3-Diaminopropan zugegeben. Anschließend wird unter Druck auf 150 °C erhitzt und 5 Stunden bei 150 °C gerührt. Nach dem Abkühlen auf 25°C wird der Pigmentdispergator abgesaugt und mit Wasser neutral gewaschen. Man erhält 495 Teile Presskuchen Pigmentdispergator 6,7 %ig. Ein Teil wird bei 80°C getrocknet.

Analyse: Ber.: 10,5 % N
Gef.: 10,5 % N

$^1$H-NMR ($D_2SO_4$): δ 8,7; 5,6; 4,1; 2,9; 2,8; 2,5; 1,9; ppm.

Beispiel 23b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel LIII, hergestellt gemäß Beispiel 23a, mechanisch gemischt. Man erhält eine Pigmentzubereitung, die im HS-Lack transparente und farbstarke Lackierungen liefert. Die Rheologie wird mit 4 bis 5 bewertet. Die Lösemittelechtheit der Pigmentzubereitung ist sehr gut.

Beispiel 24a

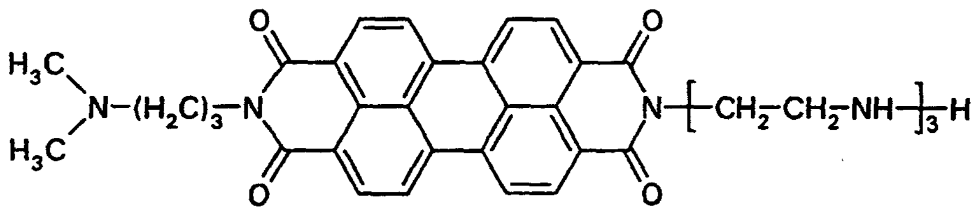

(LIV)

In einem Autoklaven werden 900 Teile Wasser vorgelegt, 44,8 Teile Perylen-3,4,9,10-tetracarbonsäuremonoanhydridmono-N,N-dimethylaminopropylimid eingetragen und 58,4 Teile Triethylentetramin zugegeben. Anschließend wird unter Druck auf 150 °C erhitzt und 5 Stunden bei 150 °C gerührt. Nach dem Abkühlen auf 25°C wird der Pigmentdispergator abgesaugt und mit Wasser neutral gewaschen. Man erhält 392,9 Teile Presskuchen Pigmentdispergator 12,4 %ig. Ein Teil wird bei 80°C getrocknet.

Analyse: Ber.: 69,5 % C
Gef.: 69,3 % C

$^1$H-NMR ($D_2SO_4$): δ 8.7; 6.6; 6.0; 4.4; 4.1; 3.3; 2.9; 2.5 und 1.9 ppm.

Beispiel 24b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel LIV, hergestellt gemäß Beispiel 24a, mechanisch gemischt. Man erhält eine Pigmentzubereitung, die im HS-Lack transparente und farbstarke Lackierungen liefert. Die Rheologie wird mit 5 bewertet.

Beispiel 25a

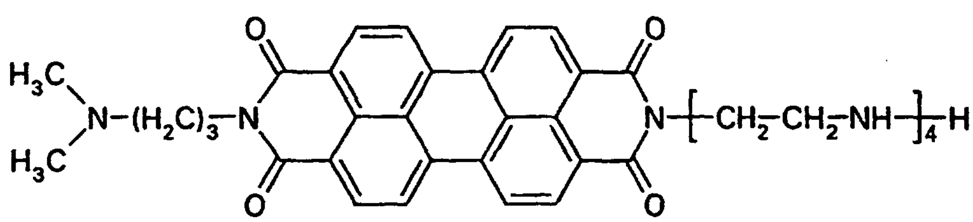

(LV)

In einem Autoklaven werden 900 Teile Wasser vorgelegt, 44,8 Teile Perylen-3,4,9,10-tetracarbonsäuremonoanhydridmono-N,N-dimethylaminopropylimid eingetragen und 75,6 Teile Tetraethylenpentamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 78,8 Teile Presskuchen Pigmentdispergator 59 %ig. Ein Teil wird bei 80°C getrocknet.

Analyse: Ber.: 68,6 % C
Gef.: 68,8 % C

$^1$H-NMR ($D_2SO_4$): δ 8.7; 4.4; 4.1; 3.3; 2.9; 2.5 und 1.9 ppm.

Beispiel 25b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel LV, hergestellt gemäß Beispiel 25a, mechanisch gemischt.
Man erhält eine Pigmentzubereitung, die im HS-Lack transparente und farbstarke Lackierungen liefert. Die Rheologie wird mit 5 bewertet.

Beispiel 26a

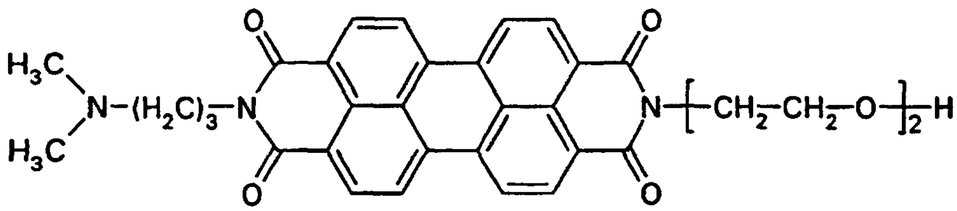

(LVI)

In einem Autoklaven werden 900 Teile Wasser vorgelegt, 44,8 Teile Perylen-3,4,9,10-tetracarbonsäuremonoanhydridmono-N,N-dimethylaminopropylimid eingetragen und 42 Teile 2-(2-Aminoethoxy)ethanol zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 129,3 Teile Presskuchen Pigmentdispergator 37,3 %ig. Ein Teil wird bei 80 °C getrocknet.

Analyse: Ber.: 7,5 % N
Gef.: 7,4 % N

$^1$H-NMR ($D_2SO_4$): δ 8.7; 5,2; 4.4; 4,2; 4,1; 2,9; 2.5 und 2,0 ppm.

Beispiel 26b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel LVI, hergestellt gemäß Beispiel 26a, mechanisch gemischt.
Man erhält eine Pigmentzubereitung, die im HS-Lack transparente und farbstarke Lackierungen liefert. Die Rheologie wird mit 4 bewertet.
Im PUR-Lack erhält man farbstarke und transparente Lackierungen. Die Metalliclackierung ist brillant. Ohne Zusatz der beiden Dispergatoren sind die Färbungen farbschwächer und deckender, die Metalliclackierung ist nicht so brillant.

Beispiel 27a

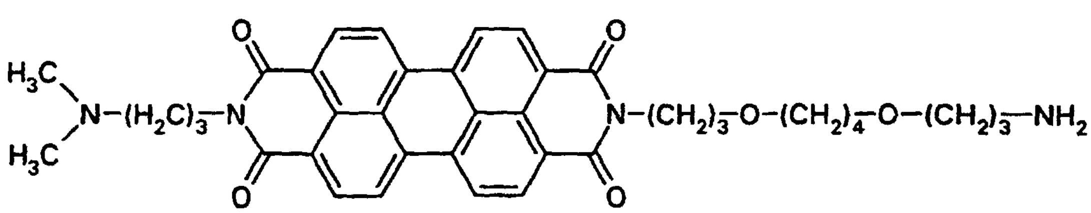

(LVII)

In einem Autoklaven werden 900 Teile Wasser vorgelegt, 44,8 Teile Perylen-3,4,9,10-tetracarbonsäuremonoanhydridmono-N,N-dimethylaminopropylimid eingetragen und 81,6 Teile 4,9-Dioxadodecan-1,12-diamin zugegeben.
Anschließend wird unter Druck auf 150 °C erhitzt und 5 Stunden bei 150 °C gerührt.
Nach dem Abkühlen auf 25 °C wird der Pigmentdispergator abgesaugt und mit Wasser neutral gewaschen.
Man erhält 310,3 Teile Presskuchen Pigmentdispergator 18,6 %ig. Ein Teil wird bei 80°C getrocknet.

Analyse: Ber.: 8,5 % N
Gef.: 8,3 % N

$^1$H-NMR ($D_2SO_4$): δ 8.7; 4.4; 4,3; 4,1; 2,9; 2.5 und 2,0 ppm.

Beispiel 27b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel LVII, hergestellt gemäß Beispiel 27a, mechanisch gemischt.
Man erhält eine Pigmentzubereitung, die im HS-Lack transparente und farbstarke Lackierungen liefert. Die Rheologie wird mit 4 bewertet.
Im AM-Lack erhält man farbstarke und transparente Lackierungen. Die Rheologie wird mit 5 bewertet, die Viskosität beträgt 6,4 s. Die Glanzmessung ergibt den Wert 63. Ohne Zusatz der beiden Dispergatoren sind die Färbungen deckender, die Rheologie wird mit 1 bis 3 bewertet und die Viskosität ist so hoch, daß sie mit dem Viskospatel nicht meßbar ist. Auch der Glanz ist wegen der starken Flockung nicht meßbar.

Beispiel 28a

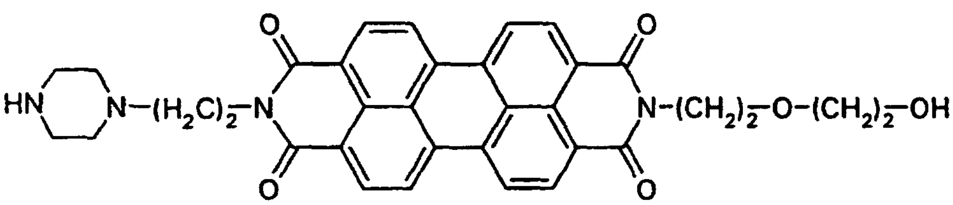

(LVIII)

In einem Autoklaven werden 900 Teile Wasser vorgelegt, 47,9 Teile Perylen-3,4,9,10-tetracarbonsäuremonoanhydridmono(2-(2-hydroxyethoxy)ethyl)imid eingetragen und 51,6 Teile N-(2-Aminoethyl)piperazin zugegeben. Anschließend wird unter Druck auf 150 °C erhitzt und 5 Stunden bei 150 °C gerührt. Nach dem Abkühlen auf 90 °C wird mit Essigsäure der pH 8-8,5 eingestellt und der Pigmentdispergator abgesaugt und mit Wasser neutral gewaschen. Man erhält 215,4 Teile Presskuchen Pigmentdispergator 22,7 %ig. Ein Teil wird bei 80 °C getrocknet.

Analyse: Ber.: 9,5 % N
Gef.: 10,0 % N

1H-NMR-Spektrum (D2S04): δ 8.7; 6.6; 6.4; 5.2; 4.4; 4.2; 3.7; 3.5; und 3.2 ppm.

Beispiel 28b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel XX, hergestellt gemäß Beipiel 1a, und mit 1,35 Teilen Pigmentdispergator der Formel LVIII, hergestellt gemäß Beispiel 28a, mechanisch gemischt. Man erhält eine Pigmentzubereitung, die im HS-Lack transparente und farbstarke Lackierungen liefert. Die Rheologie wird mit 4 bis 5 bewertet.

Beispiel 29a

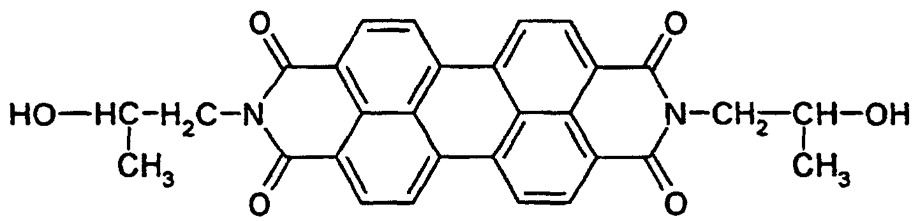

(LIX)

In einem Autoklaven werden 500 Teile Wasser vorgelegt, 181,9 Teile Presskuchen Perylen-3,4,9,10-tetracarbonsäuredianhydrid 21,5 %ig eingetragen und 30 Teile 1-Amino-2-propanol zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 139,8 Teile Presskuchen Pigmentdispergator 35,8 %ig. Ein Teil wird bei 80°C getrocknet.

Analyse: Ber.: 5,5 % N
Gef.: 5,5 % N

$^1$H-NMR ($D_2SO_4$): δ 8,7; 5,7; 4,5; 4,0 und 1,5 ppm

Beispiel 29b

10 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 0,45 Teilen Pigmentdispergator der Formel XX, hergestellt gemäß Beipiel 1a, und mit 0,45 Teilen Pigmentdispergator der Formel LIX, hergestellt gemäß Beispiel 29a, mechanisch gemischt.
Man erhält eine Pigmentzubereitung, die im HS-Lack transparente und farbstarke Lackierungen liefert. Die Rheologie wird mit 4 bewertet.

Beispiel 30a

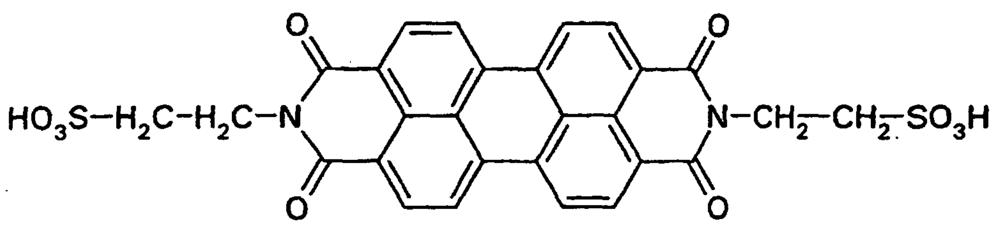

(LX)

In einem Autoklaven werden 1000 Teile Wasser vorgelegt, 184,7 Teile Presskuchen Perylen-3,4,9,10-tetracarbonsäuredianhydrid 21,2 %ig eingetragen und 50 Teile Taurin zugegeben. Durch Zugabe von 26,4 Teilen Kaliumhydroxid 85 %ig wird pH 10,8 eingestellt. Anschließend wird unter Druck auf 150°C erhitzt und 5 Stunden bei 150°C gerührt. Nach dem Abkühlen auf 25°C wird das Dikaliumsalz der Disulfosäure abgesaugt, mit Wasser neutral gewaschen und bei 80°C getrocknet. Man erhält 70 Teile Dikaliumsalz. 55,4 Teile des Dikaliumsalzes werden in 1400 Teile Monohydrat der Schwefelsäure eingetragen. Es werden 930 Teile Schwefelsäure 50 %ig zugetropft. Nach Abkühlen auf 25 °C wird die freie Disulfosäure über eine Glasfritte abgesaugt und mit Schwefelsäure 80 %ig gewaschen. Mit Salzsäure 31 %ig wird gewaschen, bis kein Sulfat mehr nachweisbar ist. Die Disulfosäure wird bei 80 °C im Vakuum getrocknet.

Man erhält 43,7 Teile Pigmentdispergator.

Analyse: Ber.: 10,6 % N
Gef.: 9,9 % N

$^1$H-NMR ($D_2SO_4$): δ 8,7; 4,6 und 3,5 ppm

Beispiel 30b

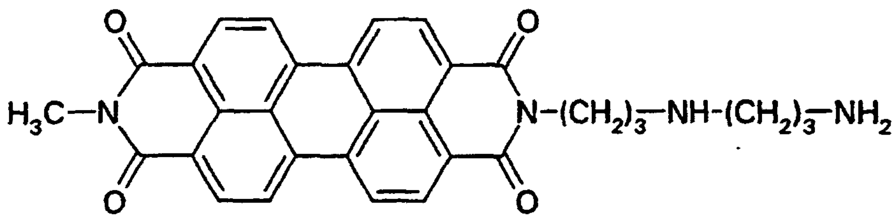

(LXI)

In einem Autoklaven werden 450 Teile Wasser vorgelegt, 37 Teile Perylen-3,4,9,10-tetracarbonsäuremonoanhydridmonomethylimid eingetragen und 47.1 Teile Dipropylentriamin zugegeben. Anschließend wird unter Druck auf 150 °C erhitzt und 5 Stunden bei 150°C gerührt. Nach dem Abkühlen auf 25°C wird der Pigmentdispergator abgesaugt und mit Wasser neutral gewaschen.
Man erhält 263 Teile Presskuchen Pigmentdispergator 15.5 %ig. Ein Teil wird bei 80°C getrocknet.

Analyse: Ber.: 12.3 % O
Gef.: 13.0 % O

$^1$H-NMR ($D_2SO_4$): δ 8,7; 6,1; 5,7; 4,2; 3,5; 3,0; 2,8; 2,0 und 1,8 ppm.

Beispiel 30c

15 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 0,75 Teilen Pigmentdispergator der Formel LX, hergestellt gemäß Beipiel 30a, und mit 0,75 Teilen Pigmentdispergator der Formel LXI, hergestellt gemäß Beispiel 30b, mechanisch gemischt.
Man erhält eine Pigmentzubereitung, die im HS-Lack transparente und farbstarke Lackierungen liefert. Die Rheologie wird mit 3 bewertet.

Beispiel 31a

In einem Autoklaven werden 900 Teile Wasser vorgelegt, 40,5 Teile Perylen-3,4,9,10-tetracarbonsäuremonoanhydridmonomethylimid eingetragen und 50 Teile β-Alanin und 27,6 Teile Kaliumhydroxid 85 %ig zugegeben. Anschließend wird unter Druck auf 150 °C erhitzt und 5 Stunden bei 150°C gerührt. Nach dem Abkühlen auf 25°C wird mit Salzsäure 31 %ig pH 2 eingestellt und eine Stunde bei 90°C gerührt. Dann wird abgesaugt und mit Wasser neutral gewaschen.
Man erhält 382,6 Teile Presskuchen Pigmentdispergator 23,3%ig. Ein Teil wird bei 80°C getrocknet.

Analyse: Ber.: 5,9 % N
Gef.: 5,6 % N

$^1$H-NMR ($D_2SO_4$): δ 8,7; 4,4 3,5 und 3,1 ppm

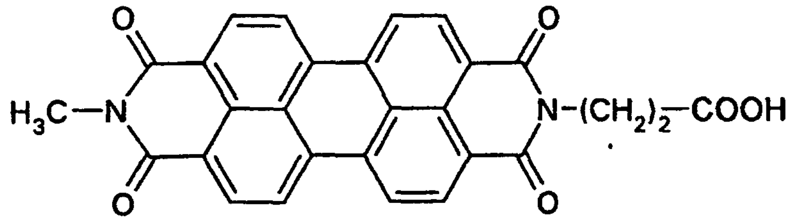

(LXII)

Beispiel 31b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel LXII, hergestellt gemäß Beipiel 31a, und mit 1,35 Teilen Pigmentdispergator der Formel LXI, hergestellt gemäß Beispiel 30b, mechanisch gemischt.
Man erhält eine Pigmentzubereitung, die im HS-Lack transparente und farbstarke Lackierungen liefert. Die Rheologie wird mit 4 bewertet und die Viskosität beträgt 2,1 s. Die Glanzmessung ergibt den Wert 74. Die Metalliclackierung ist farbstark und brillant.

Beispiel 31c (Vergleichsbeispiel: ohne den basischen Dispergator)

Wird Beispiel 31 b wiederholt, aber als einziger Pigmentdispergator nur der mit der Formel LXII, hergestellt gemäß Beipiel 31 a, mechanisch gemischt, so wird im HS-Lack die Rheologie lediglich mit 1 bis 3 bewertet und die Viskosität ist so hoch, daß sie mit dem Viskospatel nicht meßbar ist. Auch der Glanz ist durch die starke Flockung nicht meßbar.

Beispiel 32a

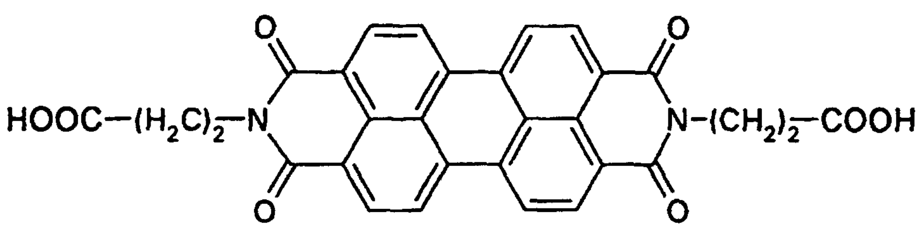

(LXIII)

In einem Autoklaven werden 1000 Teile Wasser vorgelegt, 39,2 Teile Perylen-3,4,9,10-tetracarbonsäuredianhydrid eingetragen, 35,6 Teile β-Alanin und 26,4 Teile Kaliumhydroxid 85 %ig zugegeben. Anschließend wird unter Druck auf 150 °C erhitzt und 5 Stunden bei 150 °C gerührt. Nach dem Abkühlen auf 25 °C wird mit Salzsäure 31 %ig pH 2 eingestellt und eine Stunde bei 90 °C gerührt. Dann wird abgesaugt und mit Wasser neutral gewaschen.
Man erhält 514,1 Teile Presskuchen Pigmentdispergator 10,1%ig. Ein Teil wird bei 80°C getrocknet.

Analyse: Ber.: 67,4 % C
Gef.: 67,4 % C

$^1$H-NMR ($D_2SO_4$): δ 8,7; 4,4 und 3,1 ppm

Beispiel 32b

30 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 1,35 Teilen Pigmentdispergator der Formel LXIII, hergestellt gemäß Beipiel 32a, und mit 1,35 Teilen Pigmentdispergator der Formel LXI, hergestellt gemäß Beispiel 30b, mechanisch gemischt.

Man erhält eine Pigmentzubereitung, die im HS-Lack transparente und farbstarke Lackierungen liefert. Die Rheologie wird mit 4 bewertet und die Viskosität beträgt 3,4 s. Die Glanzmessung ergibt den Wert 72. Die Metalliclackierung ist farbstark und brillant.

Beispiel 32c (Vergleichsbeispiel: ohne den basischen Dispergator)

Wird Beispiel 32b wiederholt, aber als einziger Pigmentdispergator nur der mit der Formel LXIII, hergestellt gemäß Beipiel 32a, mechanisch gemischt, so sind die Lackierungen im Vergleich zu denen aus Beispiel 32b deckender, die Rheologie wird lediglich mit 3 bewertet und die Viskosität ist so hoch, daß sie mit dem Viskospatel nicht meßbar ist. Auch der Glanz ist durch die starke Flockung nicht meßbar.

Beispiel 33a

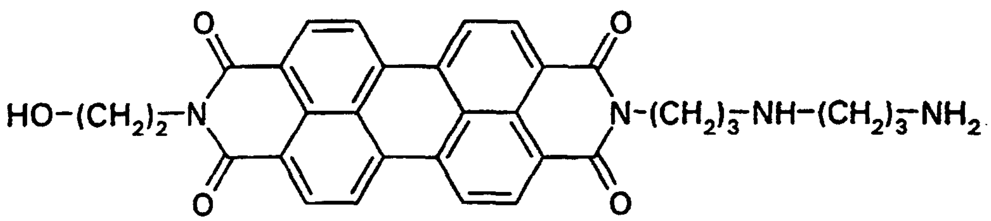

(LXIV)

In einem Autoklaven werden 300 Teile Wasser vorgelegt, 22,7 Teile Perylen-3,4,9,10-tetracarbonsäuremonoanhydridmonohydroxyethylimid eingetragen und 26,2 Teile Dipropylentriamin zugegeben. Anschließend wird unter Druck auf 150°C erhitzt und 5 Stunden bei 150°C gerührt. Nach dem Abkühlen auf 25°C wird der Pigmentdispergator abgesaugt und mit Wasser neutral gewaschen.
Man erhält 143,2 Teile Presskuchen Pigmentdispergator 19,1 %ig. Ein Teil wird bei 80°C getrocknet.

Analyse: Ber.: 70,1 % C
Gef.: 70,0 % C

$^1$H-NMR ($D_2SO_4$): δ 8,7; 6,1; 5,7; 5,2; 4,5; 4,2; 3,0; 2,8; 2,1 und 1,8 ppm

Beispiel 33b

10 Teile eines handelsüblichen Pigments (C.I. Pigment Red 179), das aus 1,8-Naphthalimid mittels einer alkalischen Schmelze mit anschließender Methylierung hergestellt wurde, werden mit 0,5 Teilen Pigmentdispergator der Formel LXIV, hergestellt gemäß Beipiel 33a, und mit 0,5 Teilen Pigmentdispergator der Formel XX, hergestellt gemäß Beispiel 1 a, mechanisch gemischt.

Mit der erhaltenen Pigmentzubereitung wird im HS-Lack eine Lackierung hergestellt, ebenso wird mit dem für die Pigmentzubereitung verwendeten handelsüblichen Pigment (C.I. Pigment Red 179) im HS-Lack eine Lackierung hergestellt. Der Vergleich der Lackierungen ergibt, daß die Transparenz durch den Einsatz des Pigmentdispergators merklich verbessert wird und die Rheologie von 3 auf 4 verbessert wird. Die Viskosität ist ohne Einsatz des Pigmentdispergators so hoch, daß sie mit dem Viskospatel nicht meßbar ist, durch den Einsatz des Pigmentdispergators beträgt sie 2,3 s. Der Wert der Glanzmessung wird von 32 auf 68 erhöht.

Beispiel 34

10 Teile eines handelsüblichen Pigments (C.I. Pigment Red 122) werden mit 0,15 Teilen Pigmentdispergator der Formel LIV, hergestellt gemäß Beipiel 24a, und mit 0,15 Teilen Pigmentdispergator der Formel XX, hergestellt gemäß Beispiel 1 a, mechanisch gemischt.
Mit der erhaltenen Pigmentzubereitung wird im AM-Lack eine Lackierung hergestellt, ebenso wird mit dem für die Zubereitung verwendeten handelsüblichen Pigment (C.I. Pigment Red 122) im AM-Lack eine Lackierung hergestellt. Der Vergleich der Lackierungen ergibt, daß die Transparenz durch den Einsatz des Pigmentdispergators merklich verbessert, die Farbstärke erhöht und die Rheologie von 3 auf 5 verbessert wird. Die Überlackierechtheit der Lackierung

der Pigmentzubereitung ist einwandfrei.

Beispiel 35

10 Teile eines handelsüblichen Pigments (C.I. Pigment Red 15:1) werden mit 0,25 Teilen Pigmentdispergator der Formel XXXVIII, hergestellt gemäß Beipiel 18a, und mit 0,25 Teilen Pigmentdispergator der Formel XX, hergestellt gemäß Beispiel 1 a, mechanisch gemischt.
Man erhält eine Pigmentzubereitung, die im AM-Lack transparente und farbstarke Lackierungen liefert. Die Überlackierechtheit ist einwandfrei.

Beispiel 36

10 Teile eines handelsüblichen Pigments (C.I. Pigment Violet 19) werden mit 0,5 Teilen Pigmentdispergator der Formel LII, hergestellt gemäß Beipiel 22a, und mit 0,5 Teilen Pigmentdispergator der Formel XX, hergestellt gemäß Beispiel 1a, mechanisch gemischt.
Man erhält eine Pigmentzubereitung, die im AM-Lack transparente und farbstarke Lackierungen liefert. Die Rheologie wird mit 5 bewertet. Die Überlackierechtheit ist einwandfrei.

Beispiel 37

10 Teile eines handelsüblichen Pigments (C.I. Pigment Brown 25) werden mit 0,25 Teilen Pigmentdispergator der Formel XXII, hergestellt gemäß Beipiel 2a, und mit 0,25 Teilen Pigmentdispergator der Formel XX, hergestellt gemäß Beispiel 1a, mechanisch gemischt.
Man erhält eine Pigmentzubereitung, die im AM-Lack transparente und farbstarke Lackierungen liefert. Die Rheologie wird mit 3 bewertet.

Beispiel 38a (Vergleichsbeispiel gegen US 4,762,569, Bsp.1)

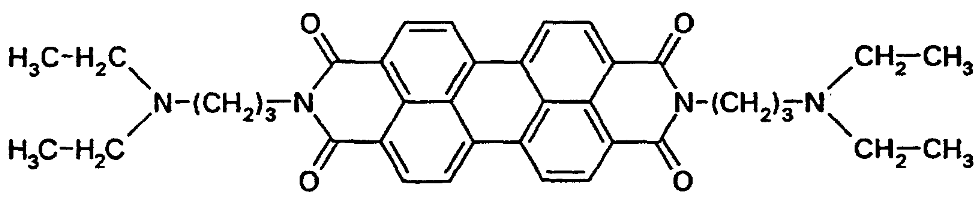

**(LXV)**

Der Pigmentdispergator der Formel LXV wird gemäß US-PS 4,762,569, Beispiel 1 hergestellt.

Analyse: Ber.: 9,1 % N
Gef.: 8,8 % N

$^1$H-NMR ($D_2SO_4$): δ 8,7; 4,1; 2,9; 2,8; 1,9 und 0,9 ppm

Beispiel 38b (Vergleichsbeispiel)

20 Teile eines handelsüblichen Pigments (C.I. Pigment Red 179), das aus Perylen-3,4,9,10-tetracarbonsäuredianhydrid durch Umsetzung mit Methylamin in wäßriger Suspension hergestellt wurde, werden mit 2 Teilen Pigmentdispergator der Formel LXV, hergestellt gemäß Beipiel 38a, mechanisch gemischt.
Im HS-Lack liefert die Pigmentzubereitung Lackierungen, die beim Einbrennen nicht mehr vollständig aushärten.

Beispiel 38c (Vergleichsbeispiel)

Im Gegensatz zu Beispiel 38b werden zusätzlich zu den 2 Teilen Pigmentdispergator der Formel LXV, hergestellt gemäß Beipiel 38a, 2 Teile Pigmentdispergator der Formel XX, hergestellt gemäß Beipiel 1a, mechanisch

gemischt.
Die Pigmentzubereitung liefert im HS-Lack farbstarke und transparente Lackierungen, die beim Einbrennen einwandfrei aushärten.

Beispiel 39a

In einem Autoklaven werden 500 Teile Wasser vorgelegt, 189,7 Teile Presskuchen Perylen-3,4,9,10-tetracarbonsäuredianhydrid 20,7 %ig eingetragen und 52 Teile Diethylaminopropylamin zugegeben. Anschließend wird unter Druck auf 150 °C erhitzt und 5 Stunden bei 150 °C gerührt. Nach dem Abkühlen auf 25 °C wird der Pigmentdispergator abgesaugt und mit Wasser neutral gewaschen.
Man erhält 138,2 Teile Presskuchen Pigmentdispergator 45,2 %ig der Formel LXV. Ein Teil wird bei 80°C getrocknet.

Analyse: Ber.: 9,1 % N
Gef.: 9,1 % N

$^1$H-NMR ($D_2SO_4$): δ 8,7; 4,1; 2,8; 1,9 und 0,9 ppm

Beispiel 39b

30 Teile eines handelsüblichen Pigments (C.I. Pigment Violet 29), das aus 1,8-Naphthalimid mittels einer alkalischen Schmelze hergestellt wurde, werden mit 1,5 Teilen Pigmentdispergator der Formel LXV, hergestellt gemäß Beipiel 39a, und mit 1,5 Teilen Pigmentdispergator der Formel XX, hergestellt gemäß Beispiel 1a, mechanisch gemischt.
Mit der erhaltenen Pigmentzubereitung wird im HS-Lack eine Lackierung hergestellt, ebenso wird mit dem für die Pigmentzubereitung verwendeten handelsüblichen Pigment (C.I. Pigment Violet 29) im HS-Lack eine Lackierung hergestellt. Der Vergleich der Lackierungen ergibt, daß die Brillanz des Metalliclackes durch den Einsatz der Pigmentdispergatoren deutlich verbessert wird. Die Viskosität ist ohne Einsatz der Pigmentdispergatoren so hoch, daß sie mit dem Viskospatel nicht meßbar ist, durch den Einsatz der Pigmentdispergatoren beträgt sie 3,9 s. Ebenso ist der Glanz ohne Einsatz der Pigmentdispergatoren durch die starke Flockung nicht meßbar, durch den Einsatz der Pigmentdispergatoren wird ein Wert von 62 gemessen.

## Patentansprüche

1. Pigmentzubereitung, **gekennzeichnet durch** einen Gehalt an

   a) mindestens einem organischen Basispigment,
   b1) mindestens einem Pigmentdispergator der allgemeinen Formel (I),

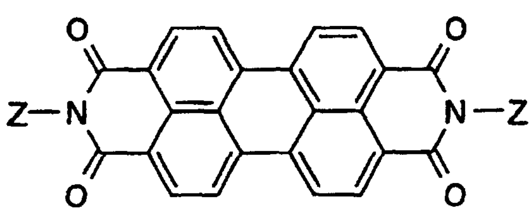

(I)

worin die beiden Reste Z gleich oder verschieden sind und Z die Bedeutung $Z^1$, $Z^2$, $Z^3$ oder $Z^4$ hat, mit der Maßgabe, daß beide Reste Z nicht gleichzeitig $Z^4$ bedeuten;
und worin

$Z^1$ ein Rest der Formel (Ia) ist,

$$-[X\text{-}Y]_q\text{-}[X^1\text{-}Y^1]_r\text{-}[X^2\text{-}NH]_sH \qquad (Ia)$$

worin

X, $X^1$ und $X^2$ gleich oder verschieden sind und einen verzweigten oder unverzweigten $C_2$-$C_6$-Alkylenrest oder einen $C_5$-$C_7$-Cycloalkylenrest bedeuten, der **durch** 1 bis 4 $C_1$-$C_4$-Alkylreste, Hydroxyreste, Hydroxyalkylreste mit 1 bis 4 Kohlenstoffatomen und/oder **durch** 1 bis 2 weitere $C_5$-$C_7$-Cycloalkylreste substituiert sein kann;

Y und $Y^1$ gleich oder verschieden sind und eine NH-, -O-, N($C_1$-$C_6$-alkyl)-Gruppe, oder

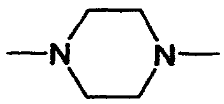

bedeuten;

q eine Zahl von 1 bis 6;

r und s unabhängig voneinander eine Zahl von 0 bis 6, wobei r und s nicht gleichzeitig Null sind;

und worin

$Z^2$ ein Rest der Formel (Ib) ist,

$$- [X\text{-}O]_{q1}\text{-}[X^1\text{-}O]_q H \quad \text{(Ib)}$$

worin

$q_1$ eine Zahl von 0 bis 6;

und worin

$Z^3$ ein Rest der Formel (Ic) ist,

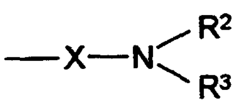

(Ic)

worin

$R^2$ und $R^3$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teiloder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können, oder

$R^2$ und $R^3$ zusammen mit dem N-Atom einen gesättigten, ungesättigten oder aromatischen heterocyclischen Ring bilden, der gegebenenfalls ein weiteres Stickstoff-, Sauerstoff- oder Schwefelatom im Ring enthält; und

X die oben genannte Bedeutung hat;

und

$Z^4$ Wasserstoff, Hydroxy, Amino, Phenyl oder $C_1$-$C_{20}$-Alkyl ist, wobei der Phenylring und die Alkylgruppe **durch** ein oder mehrere Substituenten aus der Gruppe Cl, Br, CN, OH, $C_6H_5$, Carbamoyl, $C_2$-$C_4$-Acyl und $C_1$-$C_4$-Alkoxy substituiert sein können, der Phenylring auch **durch** $NR^2R^3$ substituiert sein kann,

wobei $R^2$ und $R^3$ die oben genannte Bedeutung haben, oder die Alkylgruppe perfluoriert oder teilfluoriert ist;

und

b2) mindestens einem Pigmentdispergator der allgemeinen Formel (II),

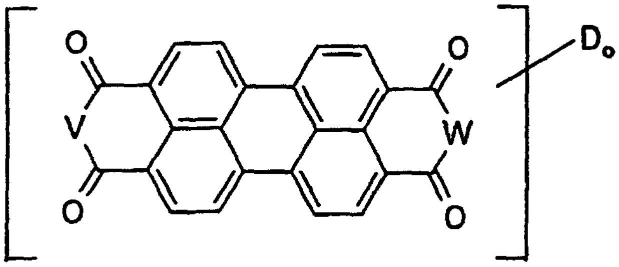

**(II)**

in welcher

V einen bivalenten Rest -O-, >$NR^4$, oder >$N-R^5-Y^-X^+$ und

W den bivalenten Rest >$N-R^5-Y^-X^+$ bedeutet,

D ein Chlor- oder Bromatom und sofern o > 1 ggf. eine Kombination davon darstellt; und

o eine Zahl von 0 bis 4 ist;

$R^4$ für ein Wasserstoffatom oder eine $C_1$-$C_{20}$-Alkylgruppe oder für eine Phenylgruppe steht, die unsubstituiert oder **durch** Halogen, $C_1$-$C_4$-Alkyl, $C_1$-$C_4$-Alkoxy oder Phenylazo ein- oder mehrfach substituiert sein kann;

$R^5$ für eine $C_1$-$C_{18}$-Alkylengruppe steht, die innerhalb der C-C-Kette **durch** ein Brückenglied aus der Reihe -O-, -$NR^6$, -S-, Phenylen, -CO-, -$SO_2$-, oder -$CR^7R^8$ oder eine chemisch sinnvolle Kombination davon ein- oder mehrfach unterbrochen sein kann, worin $R^6$, $R^7$ und $R^8$ unabhängig voneinander jeweils ein Wasserstoffatom oder eine $C_1$-$C_4$-Alkylgruppe sind, die unsubstituiert oder **durch** einen heterocyclischen Rest substituiert sein kann;
oder für eine Phenylengruppe steht, die unsubstituiert oder **durch** $C_1$-$C_4$-Alkyl oder $C_1$-$C_4$-Alkoxy ein- oder mehrfach, substituiert sein kann;

$Y^-$ einen der anionischen Reste -$SO_3^-$ oder $COO^-$ bedeutet; und

$X^+$ $H^+$ oder das Äquivalent $\frac{M^{m+}}{m}$

eines Metallkations $M^{m+}$ aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist,
oder ein Ammoniumion $N^+R^9R^{10}R^{11}R^{12}$ definiert, wobei die Substituenten $R^9$, $R^{10}$, $R^{11}$, und $R^{12}$ unabhängig voneinander jeweils ein Wasserstoffatom, $C_1$-$C_{30}$-Alkyl, $C_1$-$C_{30}$-Alkenyl, $C_5$-$C_{30}$-Cycloalkyl, unsubstituiertes oder **durch** $C_1$-$C_8$-alkyliertes Phenyl, ($C_1$-$C_4$)-Alkyl-phenyl oder eine (Poly)alkylenoxygruppe der Formel -$[CH(R^{80})$ $-CH_2-O]_k$-H sind, in der k eine Zahl von 1 bis 30 ist und $R^{80}$ für Wasserstoff, $C_1$-$C_4$-Alkyl oder, sofern k > 1 ist, eine Kombination davon steht;
und worin als $R^9$, $R^{10}$, $R^{11}$, und/oder $R^{12}$ ausgewiesenes Alkyl, Alkenyl, Cycloalkyl, Phenyl oder Alkylphenyl außerdem **durch** Amino, Hydroxy, und/oder Carboxy substituiert sein können;
oder wobei die Substituenten $R^9$ und $R^{10}$ zusammen mit dem quartären N-Atom ein fünf- bis siebengliedriges gesättigtes Ringsystem, das ggf. noch weitere Heteroatome aus der Gruppe O, S und N enthält, bilden können,
oder wobei die Substituenten $R^9$, $R^{10}$, und $R^{11}$ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können;
ausgenommen eine Pigmentzubereitung, enthaltend
ein organisches Basispigment, einen Pigmentdispergator der Formel (IX)

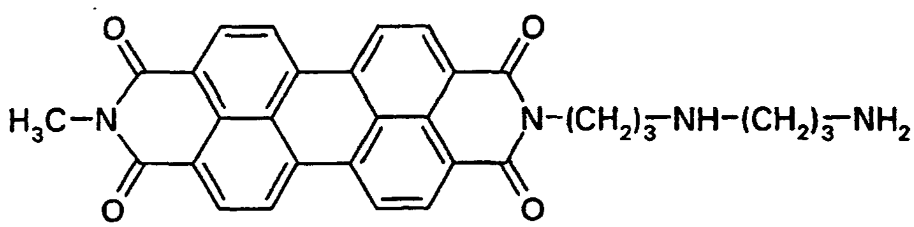 (IX)

und einen Pigmentdispergator der Formel (X)

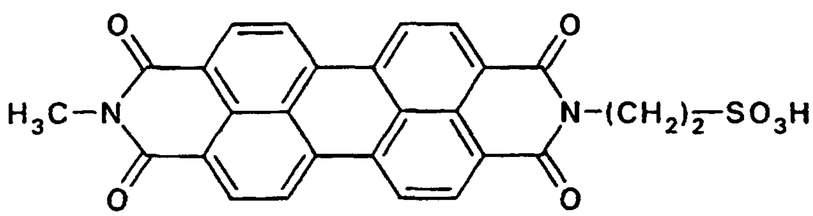 (X) .

2. Pigmentzubereitung nach Anspruch 1, **dadurch gekennzeichnet, daß** X, $X^1$ und $X^2$ $C_2$-$C_4$-Alkylen oder Cyclohexylen bedeuten.

3. Pigmentzubereitung nach Anspruch 1 oder 2, **dadurch gekennzeichnet, daß** $Z^1$ eine der Bedeutungen $-[(CH_2)_3-NH]_2-H$, $-(CH_2-CH_2-NH)_2H$, $-(CH_2)_3-NH-(CH_2)_2-NH-(CH_2)_3-NH_2$,

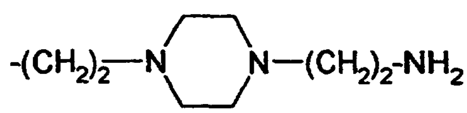

,

$-(CH_2)_3-N(CH_3)-(CH_2)_3-NH_2$, $-(CH_2)_3-O-(CH_2)_2-O-(CH_2)_3-NH_2$, $-(CH_2)_3-O-(CH_2)_3-O-(CH_2)_3-NH_2$, $-(CH_2)_2-NH-(CH_2)_3-NH_2$, $-(CH_2)_3-NH-(CH_2)_2-NH_2$, $-(CH_2-CH_2-NH)_3-H$, $-(CH_2-CH_2-NH)_4-H$, $-(CH_2-CH_2-NH)_5-H$, $-(CH_2)_3-O-(CH_2)_2-O-(CH_2)_2-O-(CH_2)_3-NH_2$,

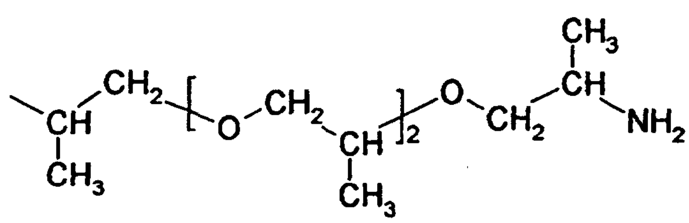

,

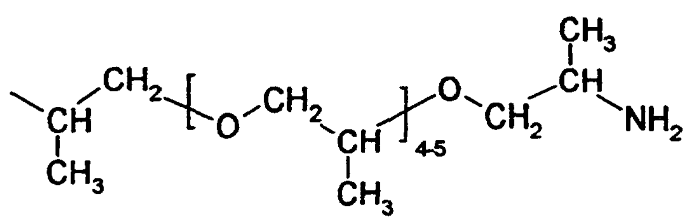

,

oder $-(CH_2)_3-O-(CH_2)_4-O-(CH_2)_3-NH_2$ hat.

**4.** Pigmentzubereitung nach einem oder mehreren der Ansprüche 1 bis 3, **dadurch gekennzeichnet, daß** $Z^2$ eine der Bedeutungen $-(CH_2)_2-OH$, $-(CH_2)_3-OH$, $-CH_2-CH(CH_3)-OH$, $-CH(CH_2-CH_3)CH_2-OH$, $-CH(CH_2OH)_2$, $-(CH_2)_2-O-(CH_2)_2-OH$ oder $-(CH_2)_3-O-(CH_2)_2-O-(CH_2)_2-OH$ hat.

**5.** Pigmentzubereitung nach einem oder mehreren der Ansprüche 1 bis 4, **dadurch gekennzeichnet, daß** $R^2$ und $R^3$ gleich oder verschieden sind und ein Wasserstoffatom, eine $C_1$-$C_6$-Alkylgruppe, eine durch 1 bis 2 Substituenten aus der Gruppe Hydroxy, Acetyl, Methoxy, Ethoxy, Chlor und Brom substituierte $C_1$-$C_6$-Alkylgruppe darstellen, oder $R^2$ und $R^3$ zusammen mit dem angrenzenden N-Atom einen Imidazolyl-, Piperidinyl-, Morpholinyl-, Pipecolinyl-, Pyrrolyl-, Pyrrolidinyl-, Pyrazolyl- oder Piperazinyl-Ring bilden.

**6.** Pigmentzubereitung nach einem oder mehreren der Ansprüche 1 bis 5, **dadurch gekennzeichnet, daß** $Z^3$ eine der Bedeutungen $-(CH_2)_2-NH_2$, $-(CH_2)_3-NH_2$, $-CH_2-CH(CH_3)-NH_2$, $-CH_2-C(CH_3)_2-CH_2-NH_2$,

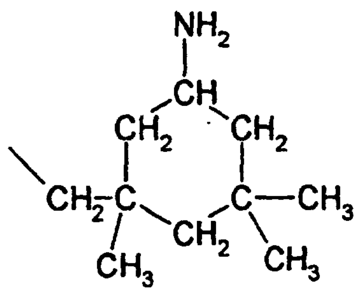 , 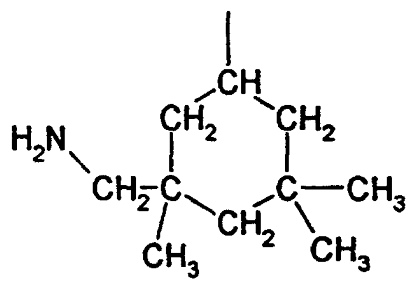 ,

$-(CH_2)_2-NH-CH_3$, $-(CH_2)_2-N(CH_3)_2$, $-(CH_2)_2-NH-CH_2-CH_3$, $-(CH_2)_2-N(CH_2-CH_3)_2$, $-(CH_2)_3-NH-CH_3$, $-(CH_2)_3-N(CH_3)_2$, $-(CH_2)_3-NH-CH_2-CH_3$ oder $-(CH_2)_3-N(CH_2-CH_3)_2$ hat.

**7.** Pigmentzubereitung nach einem oder mehreren der Ansprüche 1 bis 6, **dadurch gekennzeichnet, daß** $Z^4$ Wasserstoff, Amino, Phenyl, Benzyl, mit $NR^2R^3$ substituiertes Phenyl oder Benzyl, $C_1$-$C_6$-Alkyl oder ein durch 1 bis 2 Substituenten aus der Gruppe Hydroxy, Acetyl, Methoxy und Ethoxy substituiertes $C_2$-$C_6$-Alkyl, besonders bevorzugt Wasserstoff,

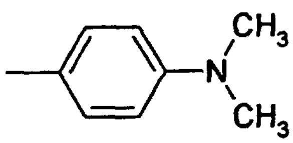 , 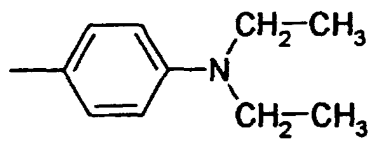 ,

Methyl, Ethyl, Propyl, Butyl, Benzyl, Hydroxyethyl, Hydroxypropyl oder Methoxypropyl ist.

**8.** Pigmentzubereitung nach einem oder mehreren der Ansprüche 1 bis 7, **dadurch gekennzeichnet, daß** $R^4$ die Bedeutung Wasserstoff, $C_1$-$C_4$-Alkyl oder Phenyl und $R^5$ die Bedeutung $C_1$-$C_6$-Alkylen, vorzugsweise Ethylen oder Propylen, hat.

**9.** Pigmentzubereitung nach einem oder mehreren der Ansprüche 1 bis 8, **dadurch gekennzeichnet, daß** das Basispigment ein Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Thioindigo-, Isoindolin, Isoindolinon-, Pyranthron-, Isoviolanthron- oder ein Carbon Black-Pigment ist.

**10.** Pigmentzubereitung nach einem oder mehreren der Ansprüche 1 bis 9, enthaltend

a) 40 bis 99 Gew.-%, vorzugsweise 60 bis 98 Gew.-%, mindestens eines Basispigments a),
b) 1 bis 40 Gew.-%, vorzugsweise 2 bis 30 Gew.-%, einer Mischung aus mindestens einem Pigmentdispergator b1) der Formel (I) und mindestens einem Pigmentdispergator b2) der Formel (II),

c) 0 bis 20 Gew.-%, vorzugsweise 0,1 bis 15 Gew.-% an oberflächenaktiven Mitteln und
d) 0 bis 20 Gew.-%, vorzugsweise 0,1 bis 10 Gew.-% an anderen üblichen Zusatzstoffen,

wobei die Anteile der jeweiligen Komponenten auf das Gesamtgewicht der Zubereitung (100 Gew.-%) bezogen sind.

**11.** Verfahren zur Herstellung einer Pigmentzubereitung nach einem oder mehreren der Ansprüche 1 bis 10, **dadurch gekennzeichnet, daß** man den oder die Pigmentdispergatoren der Formeln (I) und (II) sowie das Basispigment miteinander mischt oder an einem beliebigen Zeitpunkt ihres Herstellungsprozesses aufeinander einwirken läßt.

**12.** Verfahren nach Anspruch 11, **dadurch gekennzeichnet, daß** die Pigmentdispergatoren der Formeln (I) und/oder (II) vor oder nach der Synthese des Basispigments; nach einem Feinverteilungsprozess des Basispigments, oder nach einer Lösemittelbehandlung des Basispigments zugegeben werden.

**13.** Verfahren nach Anspruch 11 oder 12, **dadurch gekennzeichnet, daß** die Pigmentdispergatoren und/oder das organische Basispigment in Form eines wasserfeuchten Preßkuchens zusammengegeben werden, oder als trockene Granulate oder Pulver miteinander vermischt werden.

**14.** Verfahren nach Anspruch 11, **dadurch gekennzeichnet, daß** die Pigmentdispergatoren der Formel (I) und (II) und ein Perylenpigment durch Umsetzung von Perylen-3,4,9,10-tetracarbonsäuremonoanhydridmonoimiden der Formel (IV)

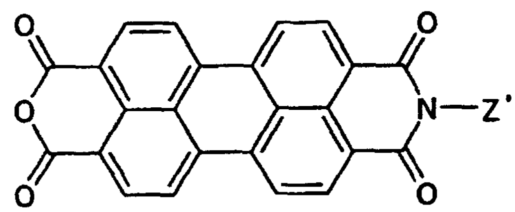

**(IV)**

worin Z' die Bedeutung von Z, $R^4$ oder von $R^5$-$Y^-X^+$ hat, wie in Anspruch 1 definiert, und/oder von Perylen-3,4,9,10-tetracarbonsäure-dianhydrid mit einem Amin der Formel (VII)

$$H_2N - Z^4 \qquad (VII),$$

worin $Z^4$ wie in Anspruch 1 definiert ist, als Mischung hergestellt werden.

**15.** Verwendung einer Pigmentzubereitung nach einem oder mehreren der Ansprüche 1 bis 10 als Farbmittel zum Pigmentieren von hochmolekularen organischen Materialien, Tinten und Druckfarben, insbesondere Kunststoffe, Harze, Lacke, Anstrichfarben, elektrophotographische Toner und Entwickler, Pulverlacke und Ink-Jet-Tinten.

**16.** Pigmentpräparation, bestehend im wesentlichen aus einer Pigmentzubereitung gemäß einem oder mehreren der Ansprüche 1 bis 10, einem hochmolekularen organischen Material, insbesondere einem Lack, und gegebenenfalls oberflächenaktiven Mitteln.

## Claims

**1.** A pigment preparation comprising

a) at least one organic base pigment,
b1) at least one pigment dispersant of the formula (I),

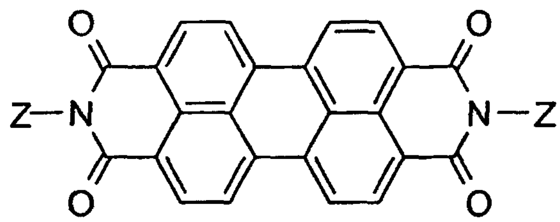 (I)

in which the two radicals Z are identical or different and Z has the definition $Z^1$, $Z^2$, $Z^3$ or $Z^4$, with the proviso that both radicals Z are not simultaneously $Z^4$,
and in which

$Z^1$ is a radical of formula (Ia),

$$-[X\text{-}Y]_q\text{-}[X^1\text{-}Y^1]_r\text{-}[X^2\text{-}NH]_sH \qquad \text{(Ia)}$$

in which

$X$, $X^1$ and $X^2$ are identical or different and are a branched or unbranched $C_2$-$C_6$-alkylene radical or a $C_5$-$C_7$-cycloalkylene radical which can be substituted by 1 to 4 $C_1$-$C_4$-alkyl radicals, hydroxyl radicals, hydroxyalkyl radicals having 1 to 4 carbon atoms, and/or by 1 or 2 further $C_5$-$C_7$-cycloalkyl radicals;
$Y$ and $Y^1$ are identical or different and are an NH, -O or N($C_1$-$C_6$-alkyl) group, or

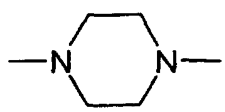 ;

q is a number from 1 to 6;
r and s independently of one another are a number from 0 to 6, r and s not simultaneously being zero;

and in which

$Z^2$ is a radical of formula (Ib),

$$-[X\text{-}O]_{q1}\text{-}[X^1\text{-}O]_qH \qquad \text{(Ib)}$$

in which

$q_1$ is a number from 0 to 6;

and in which

$Z^3$ is a radical of formula (Ic),

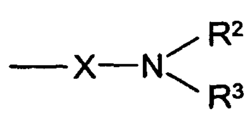 (Ic)

in which

$R^2$ and $R^3$ independently of one another are a hydrogen atom, a substituted or unsubstituted or partly fluorinated or perfluorinated alkyl group having 1 to 20 carbon atoms, or a substituted or unsubstituted or partly fluorinated or perfluorinated alkenyl group having 2 to 20 carbon atoms, the substituents being able to be hydroxyl, phenyl, cyano, chloro, bromo, $C_2$-$C_4$-acyl or $C_1$-$C_4$-alkoxy, or

$R^2$ and $R^3$ together with the nitrogen atom, form a saturated, unsaturated or aromatic heterocyclic ring with or without a further nitrogen, oxygen or sulfur atom in the ring; and

X is as defined above;

and

$Z^4$ is hydrogen, hydroxyl, amino, phenyl or $C_1$-$C_{20}$-alkyl, the phenyl ring and the alkyl group being able to be substituted by one or more substituents from the group consisting of Cl, Br, CN, OH, $C_6H_5$, carbamoyl, $C_2$-$C_4$-acyl and $C_1$-$C_4$-alkoxy and the phenyl ring also being able to be substituted by $NR^2R^3$, where $R^2$ and $R^3$ are as defined above, or the alkyl group is perfluorinated or partly fluorinated;

and

b2) at least one pigment dispersant of the formula (II),

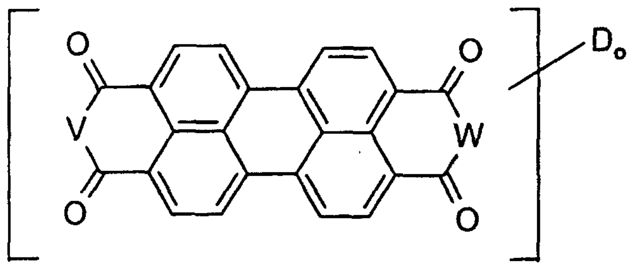

(II)

in which

V is a bivalent radical -O-, $>NR^4$, or $>N-R^5-Y^-X^+$, and

W is the bivalent radical $>N-R^5-Y^-X^+$,

D is a chlorine or bromine atom and, if o > 1, may be a combination thereof, and

o is a number from 0 to 4;

$R^4$ is a hydrogen atom or a $C_1$-$C_{20}$-alkyl group or is a phenyl group which can be unsubstituted or substituted one or more times, by halo, $C_1$-$C_4$-alkyl, $C_1$-$C_4$-alkoxy or phenylazo,

$R^5$ is a $C_1$-$C_{18}$-alkylene group which can be interrupted one or more times within the C-C-chain by a bridge member from the series consisting of -O-, $-NR^6$-, -S-, phenylene, -CO-, $-SO_2$-, or $-CR^7R^8$ or a chemically logical combination thereof, in which $R^6$, $R^7$ and $R^8$ independently of one another are each a hydrogen atom or a $C_1$-$C_4$-alkyl group which can be unsubstituted or substituted by a heterocyclic radical, or is a phenylene group which can be unsubstituted or substituted one or more times, by $C_1$-$C_4$-alkyl or $C_1$-$C_4$-alkoxy,

$Y^-$ is one of the anionic radicals $-SO_3^-$ or $COO^-$, and

$X^+$ is $H^+$ or the equivalent $\frac{M^{m+}}{m}$

of a metal cation $M^{m+}$ from main groups 1 to 5 or from transition groups 1 or 2 or 4 to 8 of the Periodic Table of the Chemical Elements, m being one of the numbers 1, 2 and 3, or defines an ammonium ion $N^+R^9R^{10}R^{11}R^{12}$, in which the substituents $R^9$, $R^{10}$, $R^{11}$ and $R^{12}$ independently of one another are each a hydrogen atom, $C_1$-$C_{30}$-alkyl, $C_1$-$C_{30}$-alkenyl, $C_5$-$C_{30}$-cycloalkyl, unsubstituted or $C_1$-$C_8$-alkyl-substituted phenyl, ($C_1$-$C_4$)-alkyl-phenyl, or are a (poly)alkyleneoxy group of the formula $-[CH(R^{80})-CH_2-O]_k-H$ in which k is a number from 1 to 30 and $R^{80}$ is hydrogen, $C_1$-$C_4$-alkyl or, if k > 1, is a combination thereof; and in which alkyl, alkenyl, cycloalkyl, phenyl or alkylphenyl $R^9$, $R^{10}$, $R^{11}$, and/or $R^{12}$ can be further substituted by amino, hydroxyl, and/or carboxyl; or in which the substituents $R^9$ and $R^{10}$, together with the quaternary nitrogen atom, can form a five- to seven-membered saturated ring system comprising if desired further heteroatoms from the group consisting of O, S and N; or in which the substituents $R^9$, $R^{10}$, and $R^{11}$, together with the quaternary nitrogen atom, can form a five- to seven-membered aromatic ring system comprising if desired further heteroatoms from the group consisting of O, S and

N and onto which additional rings may be fused; with the exception of a pigment preparation comprising an organic base pigment, a pigment dispersant of the formula (IX)

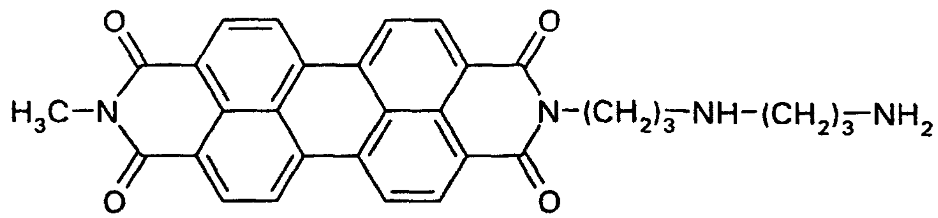

(IX)

and a pigment dispersant of formula (X)

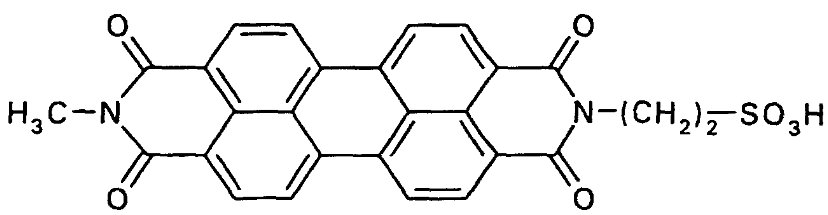

(X) .

**2.** A pigment preparation as claimed in claim 1, wherein X, $X^1$ and $X^2$ are $C_2$-$C_4$-alkylene or cyclohexylene.

**3.** A pigment preparation as claimed in claim 1 or 2, wherein $Z^1$ has one of the definitions $-[(CH_2)_3-NH]_2-H$, $-(CH_2-CH_2-NH)_2H$, $-(CH_2)_3-NH-(CH_2)_2-NH-(CH_2)_3-NH_2$,

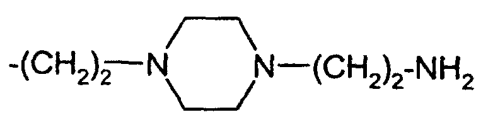

,

$-(CH_2)_3-N(CH_3)-(CH_2)_3-NH_2$, $-(CH_2)_3-O-(CH_2)_2-O-(CH_2)_3-NH_2$, $-(CH_2)_3-O-(CH_2)_3-O-(CH_2)_3-NH_2$, $-(CH_2)_2-NH-(CH_2)_3-NH_2$, $-(CH_2)_3-NH-(CH_2)_2-NH_2$, $-(CH_2-CH_2-NH)_3-H$, $-(CH_2-CH_2-NH)_4-H$, $-(CH_2-CH_2-NH)_5-H$, $-(CH_2)_3-O-(CH_2)_2-O-(CH_2)_2-O-(CH_2)_3-NH_2$,

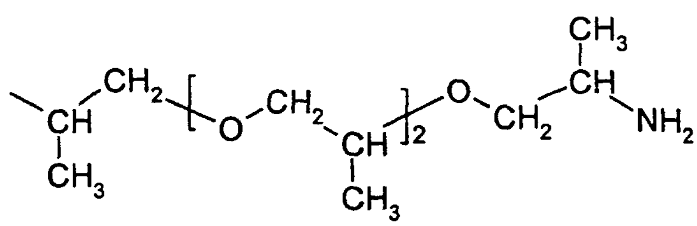

,

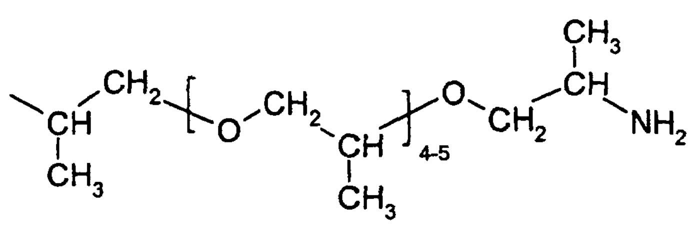

,

or
$-(CH_2)_3-O-(CH_2)_4-O-(CH_2)_3-NH_2$.

**4.** A pigment preparation as claimed in one or more of claims 1 to 3, wherein Z has one of the definitions $-(CH_2)_2-OH$, $-(CH_2)_3-OH$, $-CH_2-CH(CH_3)-OH$, $-CH(CH_2-CH_3)CH_2-OH$, $-CH(CH_2OH)_2$, $-(CH_2)_2-O-(CH_2)_2-OH$, or $-(CH_2)_3-O-(CH_2)_2-O-(CH_2)_2-OH$.

**5.** A pigment preparation as claimed in one or more of claims 1 to 4, wherein $R^2$ and $R^3$ are identical or different and are a hydrogen atom, a $C_1$-$C_6$-alkyl group, a $C_1$-$C_6$-alkyl group substituted by 1 or 2 substituents from the group consisting of hydroxyl, acetyl, methoxy, ethoxy, chloro and bromo, or $R^2$ and $R^3$, together with the adjacent nitrogen atom, form an imidazolyl, piperidyl, morpholinyl, pipecolinyl, pyrrolyl, pyrrolidinyl, pyrazolyl or piperazinyl ring.

**6.** A pigment preparation as claimed in one or more of claims 1 to 5, wherein $Z^3$ has one of the definitions $-(CH_2)_2-NH_2$, $-(CH_2)_3-NH_2$, $-CH_2-CH(CH_3)-NH_2$, $-CH_2-C(CH_3)_2-CH_2-NH_2$,

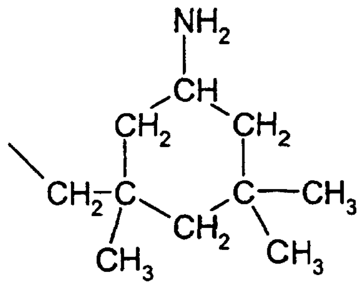

,

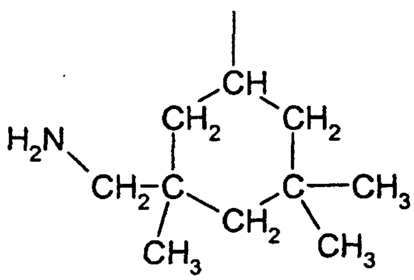

,

$-(CH_2)_2-NH-CH_3$, $-(CH_2)_2-N(CH_3)_2$, $-(CH_2)_2-NH-CH_2-CH_3$, $-(CH_2)_2-N(CH_2-CH_3)_2$, $-(CH_2)_3-NH-CH_3$, $-(CH_2)_3-N(CH_3)_2$, $-(CH_2)_3-NH-CH_2-CH_3$ or $-(CH_2)_3-N(CH_2-CH_3)_2$.

**7.** A pigment preparation as claimed in one or more of claims 1 to 6, wherein $Z^4$ is hydrogen, amino, phenyl, benzyl, $NR^2R^3$-substituted phenyl or benzyl, $C_1$-$C_6$-alkyl, or $C_2$-$C_6$-alkyl substituted by 1 or 2 substituents from the group consisting of hydroxyl, acetyl, methoxy and ethoxy, with particular preference hydrogen,

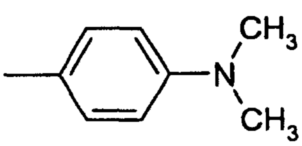

,

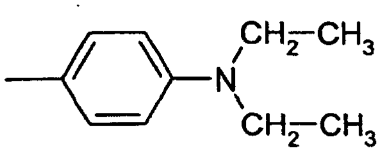

,

methyl, ethyl, propyl, butyl, benzyl, hydroxyethyl, hydroxypropyl or methoxypropyl.

**8.** A pigment preparation as claimed in one or more of claims 1 to 7, wherein $R^4$ has the definition hydrogen, $C_1$-$C_4$-alkyl or phenyl and $R^5$ has the definition $C_1$-$C_6$-alkylene, preferably ethylene or propylene.

**9.** A pigment preparation as claimed in one or more of claims 1 to 8, wherein said base pigment is a perylene, perinone, quinacridone, quinacridonequinone, anthraquinone, anthanthrone, benzimidazolone, disazo condensation, azo,

indanthrone, phthalocyanine, triarylcarbonium, dioxazine, aminoanthraquinone, diketopyrrolopyrrole, thioindigo, isoindoline, isoindolinone, pyranthrone, isoviolanthrone or carbon black pigment.

**10.** A pigment preparation as claimed in one or more of claims 1 to 9, comprising

a) from 40 to 99% by weight, preferably from 60 to 98% by weight, of at least one base pigment a),
b) from 1 to 40% by weight, preferably from 2 to 30% by weight, of a mixture of at least one pigment dispersant b1) of the formula (I) and at least one pigment dispersant b2) of the formula (II),
c) from 0 to 20% by weight, preferably from 0.1 to 15% by weight, of surfactants, and
d) from 0 to 20% by weight, preferably from 0.1 to 10% by weight, of other customary additives,

the proportions of the respective components being based on the total weight of the preparation (100% by weight).

**11.** A process for producing a pigment preparation as claimed in one or more of claims 1 to 10, which comprises mixing the pigment dispersant or dispersants of the formulae (I) and (II) and the base pigment with one another or allowing them to act on one another at any desired point in time in their production process.

**12.** The process as claimed in claim 11, wherein the pigment dispersants of the formulae (I) and/or (II) are added before or after the synthesis of the base pigment; after a fine division process of the base pigment; or after a solvent treatment of the base pigment.

**13.** The process as claimed in claim 11 or 12, wherein the pigment dispersants and/or the organic base pigment are combined in the form of a water-moist presscake, or mixed with one another as dry granules or powders.

**14.** The process as claimed in claim 11, wherein the pigment dispersants of the formula (I) and (II) and a perylene pigment are prepared as a mixture by reacting perylene-3,4,9,10-tetracarboxylic monoanhydride monoimides of the formula (IV)

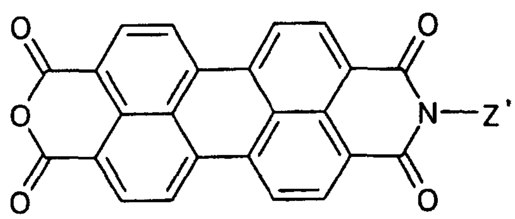

(IV)

in which Z' has the definition of Z, $R^4$ or $R^5$-$Y^-X^+$, as defined in claim 1, and/or reacting perylene-3,4,9,10-tetracarboxylic dianhydride with an amine of the formula (VII)

$$H_2N - Z^4 \qquad (VII),$$

in which $Z^4$ is as defined in claim 1.

**15.** The use of a pigment preparation as claimed in one or more of claims 1 to 10 as a colorant to pigment high molecular mass organic materials, writing, drawing and printing inks, especially plastics, resins, varnishes, paints, electrophotographic toners and developers, powder coating materials, and ink jet inks.

**16.** A prepared pigment formulation consisting essentially of a pigment preparation as claimed in one or more of claims 1 to 10, a high molecular mass organic material, especially a varnish, and, if desired, surfactants.

**Revendications**

**1.** Préparation pigmentaire **caractérisée par** une teneur en

a) au moins un pigment de base organique,
b1) au moins un agent dispersant de pigment de formule générale (I)

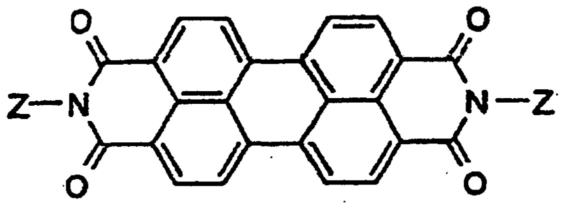

(I)

dans laquelle les deux restes Z sont identiques ou différents et Z possède la signification de $Z^1$, $Z^2$, $Z^3$ ou $Z^4$, à condition que les deux restes Z ne représentent pas simultanément $Z^4$ ;
et où

$Z^1$ est un reste de formule (Ia)

$$-[X\text{-}Y]_q\text{-}[X^1\text{-}Y^1]_r\text{-}[X^2\text{-}NH]_sH \quad \text{(Ia)}$$

où

$X$, $X^1$ et $X^2$ sont identiques ou différents et représentent un reste alkylène en $C_2$-$C_6$ linéaire ou ramifié ou un reste cycloalkylène en $C_5$-$C_7$, qui peut être substitué par 1 à 4 restes alkyle en $C_1$-$C_4$, restes hydroxy, restes hydroxyalkyle présentant 1 à 4 atomes de carbone et/ou par 1 à 2 autres restes cycloalkyle en $C_5$-$C_7$ ;

$Y$ et $Y^1$ sont identiques ou différents et représentent un groupe NH-, -O-, N-alkyle en $C_1$-$C_6$ ou

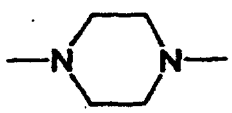

;

q va de 1 à 6 ;

r et s indépendamment l'un de l'autre vont de 0 à 6, r et s ne valent pas zéro en même temps ;

et où

$Z^2$ représente un reste de formule (Ib)

$$-[X\text{-}O]_{q1}\text{-}[X^1\text{-}O]_qH \quad \text{(Ib)}$$

où

$q_1$ va de 0 à 6 ;

et où

$Z^3$ représente un reste de formule (Ic),

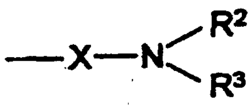

(Ic)

où

R² et R³ indépendamment l'un de l'autre représentent un atome d'hydrogène, un groupe alkyle présentant de 1 à 20 atomes de carbone, substitué ou non substitué, partiellement fluoré ou perfluoré, ou un groupe alcényle présentant de 2 à 20 atomes de carbone, substitué ou non substitué, partiellement fluoré ou perfluoré, les substituants peuvent être hydroxy, phényle, cyano, chlore, brome, acyle en $C_2$-$C_4$ ou alkoxy en $C_1$-$C_4$,

$R^2$ et $R^3$ conjointement avec l'atome de N forment un cycle hétérocyclique saturé, insaturé ou aromatique, qui présente éventuellement un autre atome d'azote, d'oxygène ou de soufre dans le cycle ; et

X possède la signification citée ci-dessus ;

et

$Z^4$ représente un atome d'hydrogène, un groupe hydroxy, amino, phényle ou alkyle en $C_1$-$C_{20}$, le cycle phényle et le groupe alkyle pouvant être substitué par un ou plusieurs substituants Cl, Br, CN, OH, $C_6H_5$, carbamoyle, acyle $C_2$-$C_4$ et alkoxy $C_1$-$C_4$, le cycle phényle peut également être substitué par un groupe $NR^2R^3$, $R^2$ et $R^3$ possèdent les significations données ci-dessus, ou le groupe alkyle est perfluoré ou partiellement fluoré ;

et

b2) au moins un dispersant de pigment de formule générale (II)

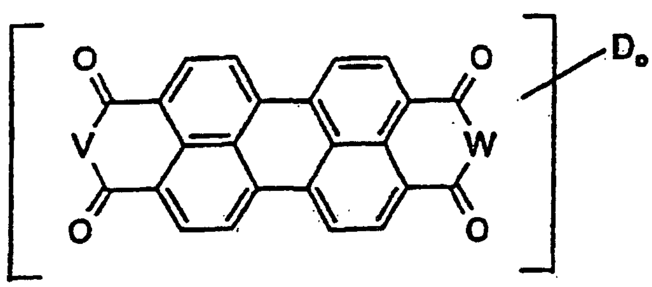

(II)

dans laquelle

V représente un reste bivalent -O-, $>NR^4$ ou $>N-R^5-Y^-X^+$ et

W représente le reste bivalent $>N-R^5-Y^-X^+$,

D représente un atome de chlore ou de brome et dans la mesure où o > 1, éventuellement une de leurs combinaisons ; et

o va de 0 à 4 ;

$R^4$ représente un atome d'hydrogène ou un groupe alkyle en $C_1$-$C_{20}$ ou un groupe phényle, qui peut être non substitué ou substitué une ou plusieurs fois par un substituant halogène, alkyle en $C_1$-$C_4$, alkoxy en $C_1$-$C_4$ ou phénylazo ;

$R^5$ représente un groupe alkylène en $C_1$-$C_{18}$, qui peut être interrompu dans la chaîne C-C une ou plusieurs fois par un élément de pontage pris dans le groupe comprenant -O-, $-NR^6$, -S-, phénylène, -CO-, $-SO_2$- ou $-CR^7R^8$ ou une de leur combinaison chimique utile, où $R^6$, $R^7$ et $R^8$ indépendamment les uns des autres représentent chacun un atome d'hydrogène ou un groupe alkyle en $C_1$-$C_4$ qui peut être non substitué ou substitué par un reste hétérocyclique ;
ou représente un groupe phénylène qui peut être non substitué ou substitué une ou plusieurs fois par des substituants alkyle en $C_1$-$C_4$ ou alkoxy en $C_1$-$C_4$ ;

$Y^-$ représente un des restes anioniques $-SO_3^-$ ou $COO^-$ ; et

$X^+$ représente $H^+$ ou l'équivalent $\frac{M^{m+}}{m}$

d'un cation métal $M^{m+}$ des 1er au 5ème groupes principaux ou des 1er ou 2ème ou des 4ème à 8ème sous-groupes de la Classification périodique des éléments, m étant un des nombres 1, 2 ou 3, ou définit un ion ammonium $N^+R^9R^{10}R^{11}R^{12}$, les substituants $R^9$, $R^{10}$, $R^{11}$ et $R^{12}$ indépendamment les uns des autres représentent chacun un atome d'hydrogène, un groupe alkyle en $C_1$-$C_{30}$, un groupe alcényle en $C_1$-$C_{30}$, cycloalkyle en $C_5$-$C_{30}$, un groupe de formule $-[CH(R^{80})-CH_2-O]_k-H$ non substitué ou substitué par un substituant phényle alkylé en $C_1$-$C_8$, (alkyl en $C_1$-$C_4$)-phényle ou un groupe (poly)oxyalkylène, où k va de 1 à 30 et $R^{80}$ représente un atome d'hydrogène, un groupe alkyle en $C_1$-$C_4$ ou, dans la mesure où $k > 1$, une de leurs combinaisons ; et où les groupes alkyle, alcényle, cycloalkyle, phényle ou alkylphényle indiqués en tant que $R^9$, $R^{10}$, $R^{11}$ et/ou $R^{12}$ peuvent en outre être substitués par des substituants amino, hydroxy et/ou carboxy ; ou les substituants $R^9$ et $R^{10}$ conjointement avec l'atome de N quaternaire forment un système cyclique saturé de 5 à 7 chaînons qui peut éventuellement comprendre encore d'autres hétéroatomes pris parmi les atomes O, S et N, ou les substituants $R^9$, $R^{10}$ et $R^{11}$ conjointement avec l'atome de N quaternaire peuvent former un système cyclique aromatique de 5 à 7 chaînons qui peut éventuellement comprendre encore d'autres hétéroatomes pris parmi les atomes O, S et N, et sur lequel sont éventuellement condensés d'autres cycles ; à l'exception d'une préparation pigmentaire renfermant un pigment de base organique, un dispersant de pigment de formule (IX)

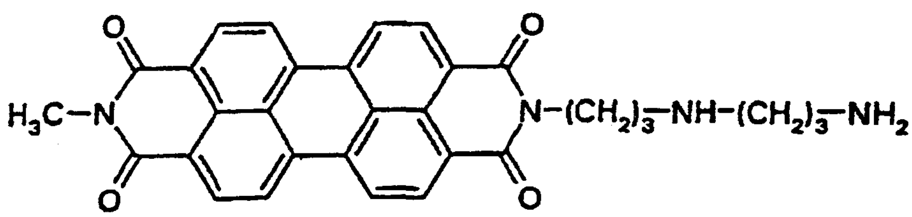

(IX)

et un dispersant de pigment de formule (X)

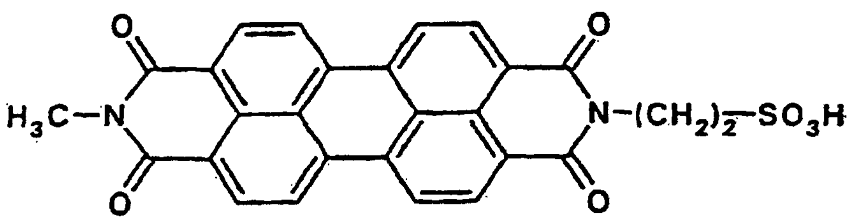

(X)

2. Préparation pigmentaire selon la revendication 1, **caractérisée en ce que** X, $X^1$ et $X^2$ représentent un groupe alkylène en $C_2$-$C_4$ ou cyclohexylène.

3. Préparation pigmentaire selon la revendication 1 ou 2, **caractérisée en ce que** $Z^1$ possède l'une des significations $-[(CH_2)_3-NH]_2-H$, $-(CH_2-CH_2-NH)_2H$, $-(CH_2)_3-NH-(CH_2)_2-NH-(CH_2)_3-NH_2$,

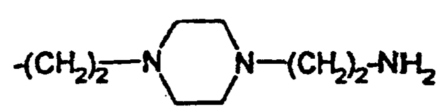

,

$-(CH_2)_3-N(CH_3)-(CH_2)_3-NH_2$, $-(CH_2)_3-O-(CH_2)_2-O-(CH_2)_3-NH_2$, $-(CH_2)_3-O-(CH_2)_3-O-(CH_2)_3-NH_2$, $-(CH_2)_2-NH-(CH_2)_3-NH_2$, $-(CH_2)_3-NH-(CH_2)_2-NH_2$, $-(CH_2-CH_2-NH)_3-H$, $-(CH_2-CH_2-NH)_4-H$, $-(CH_2-CH_2-NH)_5-H$, $-(CH_2)_3-O-(CH_2)_2-O-(CH_2)_2-O-(CH_2)_3-NH_2$,

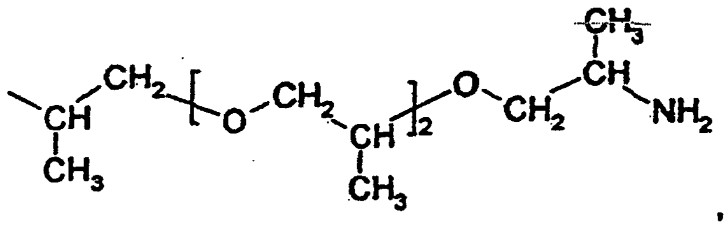

,

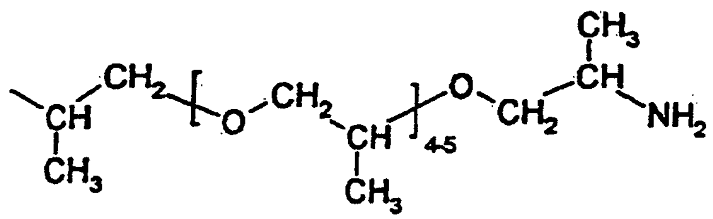

,

ou

$-(CH_2)_3-O-(CH_2)_4-O-(CH_2)_3-NH_2$

4. Préparation pigmentaire selon une ou plusieurs des revendications 1 à 3, **caractérisée en ce que** $Z^2$ possède l'une des significations $-(CH_2)_2-OH$, $-(CH_2)_3-OH$, $-CH_2-CH(CH_3)-OH$, $-CH(CH_2-CH_3)CH_2-OH$, $-CH(CH_2OH)_2$, $-(CH_2)_2-O-(CH_2)_2-OH$ ou $-(CH_2)_3-O-(CH_2)_2-O-(CH_2)_2-OH$.

5. Préparation pigmentaire selon une ou plusieurs des revendications 1 à 4, **caractérisée en ce que** $R^2$ et $R^3$ sont identiques ou différents et représentent un atome d'hydrogène, un groupe alkyle en $C_1$-$C_6$, un groupe alkyle en $C_1$-$C_6$ substitué par 1 ou 2 substituants pris dans le groupe comprenant hydroxy, acétyle, méthoxy, éthoxy, chlore et brome, ou $R^2$ et $R^3$ conjointement avec l'atome de N limitrophe forment un cycle imidazolyle, pipéridinyle, morpholinyle, pipécolinyle, pyrrolyle, pyrrolidinyle, pyrazolyle ou pipérazinyle.

6. Préparation pigmentaire selon une ou plusieurs des revendications 1 à 5, **caractérisée en ce que** $Z^3$ possède l'une des significations $-(CH_2)_2-NH_2$, $-(CH_2)_3-NH_2$, $-CH_2-CH(CH_3)-NH_2$, $-CH_2-C(CH_3)_2-CH_2-NH_2$,

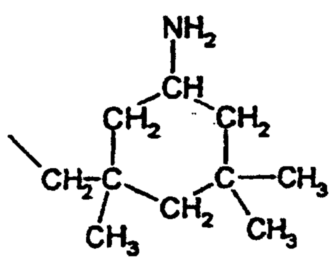

,

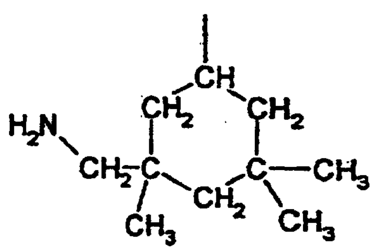

,

$-(CH_2)_2-NH-CH_3$, $-(CH_2)_2-N(CH_3)_2$, $-(CH_2)_2-NH-CH_2-CH_3)$, $-(CH_2)_2-N(CH_2-CH_3)_2$, $-(CH_2)_3-NH-CH_3$, $-(CH_2)_3-N(CH_3)_2$, $-(CH_2)_3-NH-CH_2-CH_3$ ou $-(CH_2)_3-N(CH_2-CH_3)_2$

7. Préparation pigmentaire selon une ou plusieurs des revendications 1 à 6, **caractérisée en ce que** $Z^4$ représente un atome d'hydrogène, un groupe amino, phényle, benzyle, phényle ou benzyle substitué par un groupe $NR^2R^3$, alkyle en $C_1$-$C_6$ ou alkyle en $C_2$-$C_6$ substitué par 1 ou 2 substituants pris dans le groupe comprenant hydroxy, acétyle, méthoxy et éthoxy, de manière particulièrement préférée un atome d'hydrogène,

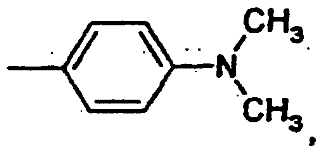

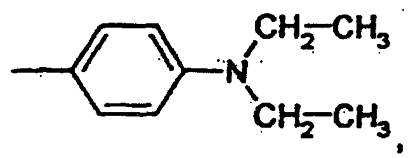

méthyle, éthyle, propyle, butyle, benzyle, hydroxyéthyle, hydroxypropyle ou méthoxypropyle.

**8.** Préparation pigmentaire selon une ou plusieurs des revendications 1 à 7, **caractérisée en ce que** $R^4$ représente un atome d'hydrogène, un groupe alkyle en $C_1$-$C_4$ ou phényle et $R^5$ représente un groupe alkylène en $C_1$-$C_6$, de préférence éthylène ou propylène.

**9.** Préparation pigmentaire selon une ou plusieurs des revendications 1 à 8, **caractérisée en ce que** le pigment de base est un pigment pérylénique, périnonique, quinacridonique, quinacridonequinonique, anthraquinonique, anthanthronique, benzimidazolonique, pigment de condensation disazoïque, azoïque, indanthronique, de phtalocyanine, de triarylcarbonium, dioxazinique, aminoanthrachinonique, dicétopyrrolopyrrolique, de thioindigo, isoindolinique, isoindolinonique, pyranthronique, isoviolanthronique ou un pigment de noir de carbone.

**10.** Préparation pigmentaire selon une ou plusieurs des revendications 1 à 9, renfermant

a) de 40 à 99 % en masse, de préférence de 60 à 98 % en masse, d'au moins un pigment de base a),
b) de 1 à 40 % en masse de préférence de 2 à 30 % en masse, d'un mélange d'au moins un dispersant de pigment b1) de formule (I) et d'au moins un dispersant de pigment b2) de formule (II),
c) de 0 à 20 % en masse, de préférence de 0,1 à 15 % en masse d'agents de surface et
d) de 0 à 20 % en masse, de préférence de 0,1 à 10 % en masse en autres substances d'addition usuelles,

les taux en composants respectifs sont relatifs au poids total de la préparation (100 % en masse).

**11.** Procédé pour la préparation d'une préparation pigmentaire selon une ou plusieurs des revendications 1 à 10, **caractérisé en ce qu'**on mélange l'un à l'autre le ou les dispersants de pigment de formules (I) et (II) ainsi que le pigment de base ou on les fait réagir l'un sur l'autre à un moment donné du procédé de préparation.

**12.** Procédé selon la revendication 11, **caractérisé en ce qu'**on ajoute les dispersants de pigment de formules (I) et/ou (II) avant ou après la synthèse du pigment de base ; après un procédé de division fine du pigment de base, ou après un traitement au solvant du pigment de base.

**13.** Procédé selon la revendication 11 ou 12, **caractérisé en ce qu'**on réunit les dispersants de pigment et/ou le pigment de base organique sous forme d'un gâteau humide d'eau ou on les mélange en tant que granulé ou poudre secs.

**14.** Procédé selon la revendication 11, **caractérisé en ce qu'**on prépare les dispersants de pigment de formule (I) et (II) et un pigment pérylénique par réaction de monoanhydromonoimides d'acide pérylène-3,4,9,10-tétracarboxylique de formule (IV)

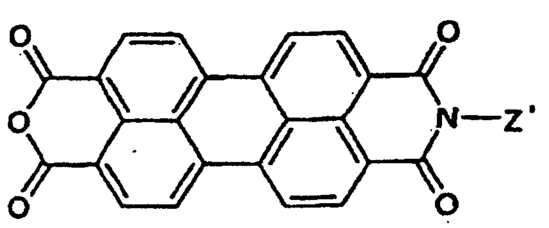

(IV)

où Z' signifie Z, $R^4$ ou $R^5$-$Y^-X^+$, comme défini à la revendication 1, et/ou du dianhydride d'acide pérylène-3,4,9,10-tétracarboxylique sur une amine de formule (VII)

$$H_2N\text{-}Z^4 \qquad (VII),$$

où $Z^4$ est défini comme à la revendication 1, sous forme de mélange.

**15.** Utilisation d'une préparation pigmentaire selon une ou plusieurs des revendications 1 à 10 en tant que colorant pour la pigmentation de matières organiques de haut poids moléculaire, d'encres à écrire et d'encres d'impression, en particulier de matières plastiques, de résines, de vernis, de peintures, de toners électrophotographiques et de révélateurs, de vernis en poudre et d'encres "ink-jet".

**16.** Préparation pigmentaire, comprenant essentiellement une préparation pigmentaire selon une ou plusieurs des revendications 1 à 10, une matière organique de haut poids moléculaire, en particulier un vernis et éventuellement des agents de surface.